(19) Europäisches Patentamt
European Patent Office
Office européen des brevets

(11) EP 4 757 224 A1

(12) **EUROPEAN PATENT APPLICATION**
published in accordance with Art. 153(4) EPC

(43) Date of publication:
10.06.2026 Bulletin 2026/24

(21) Application number: 23947097.4

(22) Date of filing: 01.08.2023

(51) International Patent Classification (IPC):
*H04L 5/00* (2006.01)

(52) Cooperative Patent Classification (CPC):
H04L 5/00

(86) International application number:
PCT/CN2023/110628

(87) International publication number:
WO 2025/025149 (06.02.2025 Gazette 2025/06)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Shenzhen Transsion Holdings Co., Ltd.
Shenzhen, Guangdong 518057 (CN)

(72) Inventors:
• WANG, Sha
  Shenzhen, Guangdong 518057 (CN)
• XIE, Yili
  Shenzhen, Guangdong 518057 (CN)
• HUANG, Wei
  Shenzhen, Guangdong 518057 (CN)

(74) Representative: Elzaburu S.L.P.
Paseo de la Castellana 259C
Torre de Cristal, planta 28
28046 Madrid (ES)

(54) **CONFIGURATION DETERMINATION METHOD, COMMUNICATION DEVICE, AND STORAGE MEDIUM**

(57)  In the technical solution of the present application, a network device determines, according to a specified spatial domain adaptation scenario type, at least one sub-configuration satisfying a preset condition, and a terminal device receives the at least one sub-configuration that is for the specified spatial domain adaptation scenario type and satisfying the preset condition, to determine or generate a channel state information report based on the sub-configuration. Through the technical solution of the present application, the network device can determine configuration elements of each sub-configuration corresponding to different spatial domain adaptation modes based on the spatial domain adaptation scenario type, and can also achieve valid configurations of the determined configuration elements of each sub-configuration, facilitating the terminal device to perform CSI measurement and reporting based on each sub-configuration corresponding to different spatial domain adaptation modes.

```
┌──────────┐                                          ┌──────────┐
│ Terminal │                                          │ Network  │
│  device  │                                          │  device  │
└────┬─────┘                                          └────┬─────┘
     │  S1, a network device determines, according to a specified spatial
     │  domain adaptation scenario type, at least one sub-configuration
     │  satisfying a preset condition
     │
     │  S11, the network device transmits the sub-configuration
     │ <───────────────────────────────────────────────────
     │
     │  S2, a terminal device receives the at least one sub-configuration
     │  satisfying the preset condition
     │ ──────────────────────────────────────────────────>
     │                                                     │
```

FIG. 5

**Description**

**TECHNICAL FIELD**

The present application relates to the technical field of communication technologies, and in particular, to a configuration determination method, a communication device and a storage medium.

**BACKGROUND**

In some implementations, a terminal device performs CSI (Channel State Information, Channel State Information) measurement only on CSI-RS (Channel State Information-Reference Signal, Channel state information reference signal) resources that have the same spatial domain adaptation mode. In some scenarios, to further reduce network energy consumption, it may be necessary to simultaneously perform CSI (Channel State Information, Channel State Information) measurement on CSI-RS (Channel State Information-Reference Signal, Channel state information reference signal) resources of different spatial domain adaptation modes. However, which elements need to be configured in the sub-configurations corresponding to CSI-RS resources with different spatial domain adaptation modes, and/or how to configure these elements in the sub-configurations, remain without a definitive solution.

The foregoing description is provided to give general background information and does not necessarily constitute the prior art.

**TECHNICAL SOLUTION**

A main objective of the present application is to provide a configuration determination method, a communication device, and a storage medium, aiming to solve the problem of how to configure sub-configurations related to spatial domain and power domain under a Type 1 (Type 1) SD (Spatial Domain, Spatial Domain) adaptation scenario or a Type 2 SD adaptation scenario, where different spatial domain adaptation modes are involved, thereby achieving reasonable CSI measurement and reporting.

To achieve the above objective, the present application provides a configuration determination method, which may be applied to a network device (for example, a 4G base station, a 5G base station, a satellite, etc.), and includes the following step:

S1, determining, according to a specified spatial domain adaptation scenario type, at least one sub-configuration satisfying a preset condition.

Optionally, the spatial domain adaptation scenario type includes at least one of the following:

a Type 1 spatial domain adaptation scenario;
a Type 2 spatial domain adaptation scenario.

Optionally, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with an indication of a channel quality indicator table;
each sub-configuration being associated with a power control offset value;
each sub-configuration being associated with a panel identifier;
all sub-configurations being associated with the same report quantity, the same report frequency configuration and/or the same codebook type.

Optionally, satisfying the preset condition further includes:

for the Type 2 spatial domain adaptation scenario, all sub-configurations being associated with the same rank indicator restriction.

Optionally, the power control offset value includes at least one of the following:

a difference relative to a common power control offset value for all sub-configurations;
a difference relative to a power control offset value of a first reference sub-configuration;
an actual power control offset value of each sub-configuration.

Optionally, the first reference sub-configuration is a sub-configuration with the largest number of ports among all sub-configurations.

Optionally, the panel identifier includes at least one of the following:

each panel associated with each sub-configuration corresponds to a bit value;
an index offset value between a first panel associated with each sub-configuration and a first panel associated with a first reference sub-configuration;
multiple panels associated with each sub-configuration being uniformly distributed.

Optionally, the method further includes at least one of the following:

the sub-configurations are contained in a channel state information report configuration;
the sub-configurations are contained in a channel state information resource configuration;
each sub-configuration corresponds to a spatial domain adaptation mode;
each sub-configuration is associated with at least one CSI-RS resource;
channel state information reference signal resource indices associated with each sub-configuration are different;
channel state information reference signal resource indices associated with multiple sub-configurations are the same.

Optionally, the first codebook configuration includes at least one of the following:

n1-n2 configuration for typel-SinglePanel;
i2 codebook subset restriction for typel-SinglePanel;
ng-n1-n2 configuration for typel-MultiPanel.

Optionally, the method further includes:
if the number of CSI-RS ports corresponding to the sub-configuration is 2, typel-SinglePanel-codebookSubsetRestriction-i2 restricts an available codebook of the sub-configuration.

Optionally, the method further includes at least one of the following:

transmitting the sub-configuration;
receiving a channel state information report which is determined or generated by a terminal device based on the sub-configuration.

The present application further provides a configuration determination method, which may be applied to a terminal device (for example, a mobile phone), and includes the following step:
S2, receiving at least one sub-configuration satisfying a preset condition, where the sub-configuration is determined by a network device according to a specified spatial domain adaptation scenario type.

Optionally, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with an indication of a channel quality indicator table;
each sub-configuration being associated with a power control offset value;
each sub-configuration being associated with a panel identifier;
all sub-configurations being associated with the same report quantity, the same report frequency configuration and/or the same codebook type.

Optionally, satisfying the preset condition further includes:
for a Type 2 spatial domain adaptation scenario, all sub-configurations being associated with the same rank indicator restriction.

Optionally, the power control offset value includes at least one of the following:

a difference relative to a common power control offset value for all sub-configurations;
a difference relative to a power control offset value of a first reference sub-configuration;
an actual power control offset value of each sub-configuration.

Optionally, the first reference sub-configuration is the sub-configuration with the largest number of ports among all sub-configurations.

Optionally, the panel identifier includes at least one of the following:

each panel associated with each sub-configuration corresponds to a bit value;
an index offset value between a first panel associated with each sub-configuration and a first panel associated with a first reference sub-configuration;
multiple panels associated with each sub-configuration being uniformly distributed.

Optionally, the method further includes at least one of the following:

the sub-configurations are contained in a channel state information report configuration;
the sub-configurations are contained in a channel state information resource configuration;
each sub-configuration corresponds to a spatial domain adaptation mode;
each sub-configuration is associated with at least one CSI-RS resource;
channel state information reference signal resource indices associated with each sub-configuration are different;
channel state information reference signal resource indices associated with multiple sub-configurations are the same.

Optionally, the first codebook configuration includes at least one of the following:

n1-n2 configuration for typeI-SinglePanel;
typeI-SinglePanel-codebookSubsetRestriction-i2;
ng-n1-n2 configuration for typeI-MultiPanel.

Optionally, the method further includes:
if the number of CSI-RS ports corresponding to the sub-configuration is 2, typeI-SinglePanel-codebookSubsetRestriction-i2 restricts an available codebook of the sub-configuration.

The present application further provides a configuration determining apparatus, including:
a determining module, configured to determine, according to a specified spatial domain adaptation scenario type, at least one sub-configuration satisfying a preset condition.

The present application further provides a configuration determining apparatus, including:
a receiving module, configured to receive at least one sub-configuration satisfying a preset condition, where the sub-configuration is determined by a network device according to a specified spatial domain adaptation scenario type.

The present application further provides a communication device, including: a memory, a processor and a configuration determination program stored in the memory and runnable on the processor. When the configuration determination program is executed by the processor, the step of any one of the aforementioned configuration determination methods is implemented.

The communication device in the present application may be a terminal device (for example, a mobile phone) or a network device (for example, a base station). The specific reference should be clarified based on the context.

The present application further provides a storage medium in which a computer program is stored, when the computer program is executed by a processor, the step of any one of the aforementioned configuration determination methods is implemented.

In the technical solution of the present application, a network device determines at least one sub-configuration satisfying a preset condition according to a specified spatial domain adaptation scenario type, and a terminal device receives the at least one sub-configuration that is for the specified spatial domain adaptation scenario type and satisfying the preset condition, so as to determine or generate a channel state information report based on the sub-configuration. Through the technical solution of the present application, the network device can determine, based on the spatial domain adaptation scenario type, configuration elements of each sub-configuration corresponding to different spatial domain adaptation modes, and can also achieve valid configurations of the determined configuration elements of each sub-configuration, facilitating the terminal device to perform CSI measurement and reporting based on each sub-configuration corresponding to different spatial domain adaptation modes.

## BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.

FIG. 1 is a schematic diagram of a hardware structure of a mobile terminal which implements various embodiments of the present application.

FIG. 2 is an architecture diagram of a communication network system provided by an embodiment of the present application.

FIG. 3 is a schematic diagram of a hardware structure of a controller 140 provided by the present application.

FIG. 4 is a schematic diagram of a hardware structure of a network node 150 provided by the present application.

FIG. 5 is a schematic interaction flowchart between a network device and a terminal device in a configuration determination method according to a first embodiment.

FIG. 6 is a schematic diagram illustrating that one sub-configuration is associated with two CSI-RS resources in a configuration determination method according to a second embodiment.

FIG. 7 is a schematic diagram illustrating a configuration of sub-configurations in a Type 2 spatial domain adaptation scenario in a configuration determination method according to a second embodiment.

FIG. 8 is a schematic diagram illustrating that one sub-configuration is associated with two CSI-RS resources in a configuration determination method according to a third embodiment.

FIG. 9 is a schematic diagram illustrating the configuration of sub-configurations in a Type 2 spatial domain adaptation scenario in a configuration determination method according to a third embodiment.

FIG. 10 is a schematic diagram illustrating that each sub-configuration is associated with a plurality of CSI-RS resources in a configuration determination method according to a fourth embodiment.

FIG. 11 is a schematic diagram illustrating the configuration of sub-configurations in a Type 1 spatial domain adaptation scenario in a configuration determination method according to a fourth embodiment.

FIG. 12 is a schematic diagram illustrating that each sub-configuration is associated with a plurality of CSI-RS resources in a configuration determination method according to a fifth embodiment.

FIG. 13 is a schematic diagram illustrating the configuration of sub-configurations in a Type 1 spatial domain adaptation scenario in a configuration determination method according to a fifth embodiment.

FIG. 14 is a schematic diagram of the determination of panel indication based on offsets from a first panel in a configuration determination method according to a sixth embodiment.

FIG. 15 is a schematic diagram of the determination of panel(s) corresponding to each sub-configuration in a Type 1 spatial domain adaptation scenario in a configuration determination method according to a sixth embodiment.

FIG. 16 is a schematic diagram of panels occupied by each sub-configuration in a Type 1 spatial domain adaptation scenario in a configuration determination method according to a seventh embodiment.

FIG. 17 is a schematic diagram of specific parameter configurations of each sub-configuration in a Type 1 spatial domain adaptation scenario in a configuration determination method according to a seventh embodiment.

FIG. 18 is a schematic diagram of specific parameter configurations of each sub-configuration in a Type 1 spatial domain adaptation scenario in a configuration determination method according to an eighth embodiment.

FIG. 19 is a schematic interaction flowchart between a network device and a terminal device in a configuration determination method according to a tenth embodiment.

FIG. 20 is a first structural schematic diagram of a processing apparatus provided by an embodiment of the present application.

FIG. 21 is a second structural schematic diagram of a processing apparatus provided by an embodiment of the present application.

FIG. 22 is a structural schematic diagram of a communication device provided by an embodiment of the present application.

Implementation of the objectives, functional features, and advantages of the present application will be further described in combined with embodiments and with reference to the accompanying drawings. Through the above drawings, explicit embodiments of the present application have been shown, and more detailed descriptions will be provided in the following. These drawings and textual descriptions are not intended to limit the scope of the concepts of the present application in any way, but to explain the concepts of the present application to those skilled in the art through reference to specific embodiments.

DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatuses and methods consistent with aspects of the present application as detailed in the appended claims.

It should be noted that, herein, the terms "include", "contain", or any other variation thereof are intended to cover a non-exclusive inclusion, such that a process, method, article, or apparatus that includes a list of elements does not include only those elements but may include other elements not expressly listed or inherent to such process, method, article, or apparatus. Without further limitation, an element defined by the phrase "include a..." does not preclude the presence of additional identical elements in the process, method, article, or apparatus that includes the element. And/or, components, features and elements with the same name in different embodiments of the present application may have the same meaning or may have different meanings. Their specific meanings need to be interpreted within the specific embodiment or further combined with the context of that specific embodiment.

It should be understood that although the terms "first", "second", "third", etc. may be used herein to describe various information, such information should not be limited by these terms. These terms are only used to distinguish information of the same type from another. For example, without departing from the scope of the document, first information may also be referred to as second information, and similarly, second information may also be referred to as first information. Depending on the context, the word "if" as used herein may be interpreted as "when" or "upon" or "in response to determining". Furthermore, as used herein, the singular forms "a/an", "one" and "the" are intended to include the plural forms as well, unless the context clearly indicates otherwise. It should be further understood that the terms "contain" and "include" indicate the presence of the stated features, steps, operations, elements, components, items, kinds, and/or groups, but do not preclude the presence or addition of one or more other features, steps, operations, elements, components, items, kinds, and/or groups. Terms used in the present application such as "or", "and/or", "include at least one of the following", etc. may be interpreted as inclusive or meaning any one or any combination. For example, "include at least one of the following: A, B, C" means "any one of the following: A; B; C; A and B; A and C; B and C; A and B and C". As another example, "A, B or C" or "A, B and/or C" means "any one of the following: A; B; C; A and B; A and C; B and C; A and B and C". An exception to this definition occurs only when combinations of elements, functions, steps, or operations are inherently mutually exclusive in some manner.

It should be understood that although various steps in the flowcharts in the embodiments of the present application are shown in an order indicated by arrows, these steps are not necessarily performed in the order indicated by the arrows. Unless explicitly stated herein, the execution of these steps is not strictly limited in order and may be performed in other orders. Moreover, at least a portion of the steps in the figures may include a plurality of sub-steps or stages, which are not necessarily executed at the same time but may be executed at different times. Their execution order is not necessarily sequential, but may be performed alternately or in rotation with other steps or at least a portion of sub-steps or stages of other steps.

Depending on the context, the words "if", "when" as used herein may be interpreted as "when" or "upon" or "in response to determining" or "in response to detecting". Similarly, depending on the context, the phrases "if it is determined" or "if (a stated condition or event) is detected" may be interpreted as "when it is determined" or "in response to determining" or "when (a stated condition or event) is detected" or "in response to detecting (a stated condition or event)".

It should be noted that, herein, step designations such as S1, S2, etc. are used for the purpose of describing the corresponding content more clearly and concisely, and do not constitute a substantive limitation on the order. Those skilled in the art, in specific implementation, may execute S2 before S1, etc., but all such variations shall fall within the protection scope of the present application.

It should be understood that the specific embodiments described herein are merely intended to explain the present application and are not intended to limit the present application.

In the following description, suffixes such as "module", "component", or "unit" used to denote elements are only for facilitating the description of the present application and have no specific meaning per se. Therefore, "module", "component", or "unit" may be used interchangeably.

The communication device in the present application may be a terminal device (for example, a mobile phone) or a network device (for example, a base station). The specific reference should be clarified based on the context.

The terminal device may be implemented in various forms. For example, the terminal device described in the present application may include a smart terminal device such as a mobile phone, a tablet computer, a laptop, a palmtop computer, a personal digital assistant (Personal Digital Assistant, PDA), a portable media player (Portable Media Player, PMP), a navigation device, a wearable device, a smart bracelet, a pedometer, etc., as well as a fixed terminal device such as a digital TV, a desktop computer, etc.

In the following description, a mobile terminal will be used as an example for illustration. Those skilled in the art will understand that the configurations according to the embodiments of the present application can also be applied to a fixed terminal device, except for an element specifically for mobile purposes.

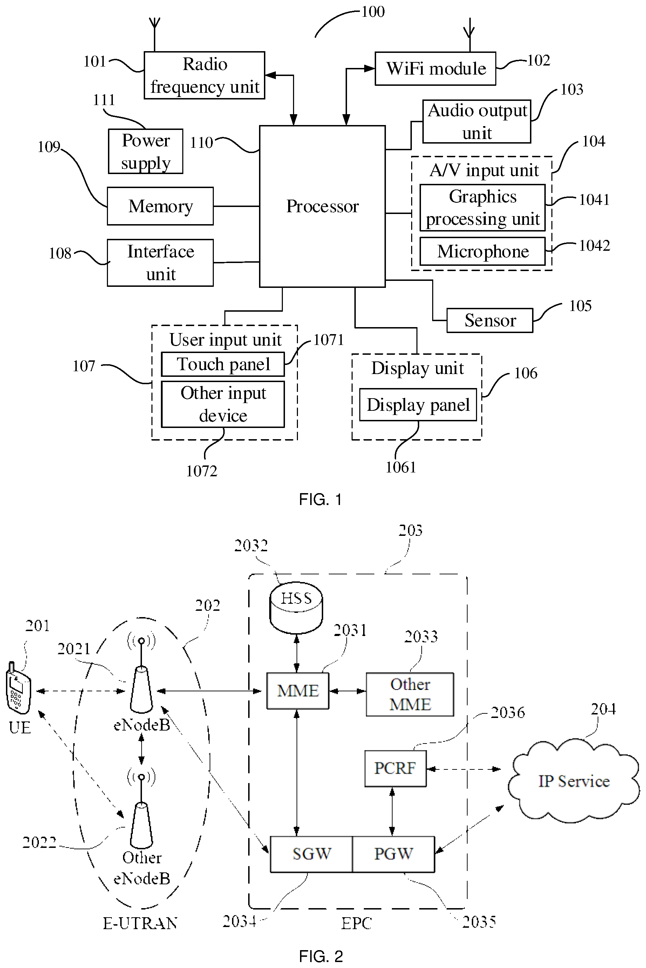

Please refer to FIG. 1, which is a schematic diagram of a hardware structure of a mobile terminal which implements various embodiments of the present application. The mobile terminal 100 may include: an RF (Radio Frequency, Radio frequency) unit 101, a WiFi module 102, an audio output unit 103, an A/V (audio/video) input unit 104, a sensor 105, a display unit 106, a user input unit 107, an interface unit 108, a memory 109, a processor 110, a power supply 111, and other components. Those skilled in the art will understand that the structure of the mobile terminal shown in FIG. 1 does not constitute a limitation on the mobile terminal. The mobile terminal may include more or fewer components than illustrated, combine some components, or have different component arrangements.

Each component of the mobile terminal will be described in detail with reference to FIG. 1.

The radio frequency unit 101 may be configured to receive and transmit signals during information or call communication. Specifically, after receiving downlink information from a base station, the radio frequency unit 101 passes the same to the processor 110 for processing. Additionally, the radio frequency unit 101 transmits uplink data to the base station. Generally, the radio frequency unit 101 includes, but is not limited to, an antenna, at least one amplifier, a transceiver, a coupler, a low noise amplifier, a duplexer, etc. And/or, the radio frequency unit 101 may also communicate with a network and other devices via wireless communication. The aforementioned wireless communication may use any communication standard or protocol, including but not limited to GSM (Global System for Mobile Communications, Global System for Mobile Communications), GPRS (General Packet Radio Service, General Packet Radio Service), CDMA2000 (Code Division Multiple Access 2000, Code Division Multiple Access 2000), WCDMA (Wideband Code Division Multiple Access, Wideband Code Division Multiple Access), TD-SCDMA (Time Division-Synchronous Code Division Multiple Access, Time Division-Synchronous Code Division Multiple Access), FDD-LTE (Frequency Division Duplexing-Long Term Evolution, Frequency Division Duplexing-Long Term Evolution), TDD-LTE (Time Division Duplexing-Long Term Evolution, Time Division Duplexing-Long Term Evolution), 5G, and 6G, etc.

WiFi is a short-range wireless transmission technology. Through the WiFi module 102, the mobile terminal can help users send and receive emails, browse web pages, and access streaming media, etc., providing users with wireless broadband Internet access. Although FIG. 1 shows the WiFi module 102, it should be understood that it is not an essential component of the mobile terminal and may be omitted as needed without changing the essence of the invention.

The audio output unit 103 may convert audio data, received by the radio frequency unit 101 or the WiFi module 102, or stored in the memory 109, into audio signals and output them as sound when the mobile terminal 100 is in a call signal reception mode, a call mode, a recording mode, a voice recognition mode, a broadcast reception mode, etc. Moreover, the audio output unit 103 may also provide audio output related to specific functions performed by the mobile terminal 100 (for example, call signal reception sound, message reception sound, etc.). The audio output unit 103 may include a speaker, a buzzer, etc.

The A/V input unit 104 is configured to receive audio or video signals. The A/V input unit 104 may include a graphics processing unit (Graphics Processing Unit, GPU) 1041 and a microphone 1042. The graphics processing unit 1041 processes image data of a static picture or a video obtained by an image capture device (for example, a camera) in a video capture mode or an image capture mode. The processed image frame may be displayed on the display unit 106. The image frame processed by the graphics processing unit 1041 may be stored in the memory 109 (or other storage medium) or transmitted via the radio frequency unit 101 or the WiFi module 102. The microphone 1042 may receive sound (audio data) via the microphone 1042 in operation modes such as a telephone call mode, a recording mode, a voice recognition mode, etc., and can process such sound into audio data. The processed audio (voice) data may be converted into a format that can be transmitted to a mobile communication base station via the radio frequency unit 101 in the case of a telephone call mode. The microphone 1042 may implement various types of noise cancellation (or suppression) algorithms to cancel (or suppress) noise or interference generated during the reception and transmission of audio signals.

The mobile terminal 100 further includes at least one type of sensor 105, such as a light sensor, a motion sensor, and other sensors. Optionally, the light sensor includes an ambient light sensor and a proximity sensor. Optionally, the ambient light sensor may adjust the brightness of the display panel 1061 according to the brightness of ambient light. The proximity sensor may turn off the display panel 1061 and/or backlight when the mobile terminal 100 is moved to the ear. As a type of a motion sensor, an accelerometer sensor can detect the magnitude of acceleration in various directions (generally three axes). When it is stationary, it can detect the magnitude and direction of gravity, and can be used for applications recognizing the posture of the mobile phone (such as screen orientation switching, related games, magnetometer posture calibration), vibration recognition related functions (such as pedometer, tapping), etc. As for other sensors that may be configured on the mobile phone, such as a fingerprint sensor, a pressure sensor, an iris sensor, a molecular sensor, a gyroscope, a barometer, a hygrometer, a thermometer, an infrared sensor, etc., which will not be detailed here.

The display unit 106 is configured to display information input by the user or information provided to the user. The display unit 106 may include a display panel 1061, which may be configured using a liquid crystal display (Liquid Crystal Display, LCD), an organic light-emitting diode (Organic Light-Emitting Diode, OLED), or other forms.

The user input unit 107 may be configured to receive input numeric or character information and generate key signal inputs related to user settings and functional control of the mobile terminal. Optionally, the user input unit 107 may include a touch panel 1071 and other input device 1072. The touch panel 1071, also known as a touch screen, may collect touch operations of the user on or near it (for example, operations using a finger, stylus, or any suitable object or accessory on or near the touch panel 1071) and drive corresponding connection devices according to preset programs. The touch panel 1071 may include two parts: a touch detection device and a touch controller. Optionally, the touch detection device detects the user's touch orientation and detects signals brought by the touch operation, then transmits the signals to the touch controller. The touch controller receives touch information from the touch detection device, converts it into contact coordinates, and transmits them to the processor 110, and can also receive and execute commands from the processor 110. And/or, the touch panel 1071 may be implemented in various types such as resistive, capacitive, infrared, and surface acoustic wave. In addition to the touch panel 1071, the user input unit 107 may also include other input device 1072. Optionally, the other input device 1072 may include, but is not limited to, one or more of a physical keyboard, a function key (such as a volume control button, a switch button, etc.), a trackball, a mouse, a joystick, etc., which is not specifically limited here.

Optionally, the touch panel 1071 may cover the display panel 1061. When the touch panel 1071 detects a touch operation on or near it, it transmits the information to the processor 110 to determine the type of touch event. Then, the processor 110 provides corresponding visual output on the display panel 1061 according to the type of touch event. Although the touch panel 1071 and the display panel 1061 are implemented as two independent components to realize the input and output functions of the mobile terminal in FIG. 1, in some embodiments, the touch panel 1071 and the display panel 1061 may be integrated to realize the input and output functions of the mobile terminal, which is not specifically limited here.

The interface unit 108 serves as an interface through which at least one external device can connect to the mobile terminal 100. For example, the external device may include a wired or wireless headphone port, an external power supply (or battery charger) port, a wired or wireless data port, a memory card port, a port for connecting a device with an identification module, an audio input/output (I/O) port, a video I/O port, a headphone port, etc. The interface unit 108 may be configured to receive input (for example, data information, power, etc.) from the external device and transmit the received input to one or more elements within the mobile terminal 100, or may be configured to transmit data between the mobile terminal 100 and the external device.

The memory 109 may be configured to store a software program and various data. The memory 109 may mainly include a program storage area and a data storage area. Optionally, the program storage area may store an operating system, application programs required for at least one function (such as sound playback function, image playback function, etc.), etc. The data storage area may store data created according to the use of the mobile phone (such as audio data, phonebook, etc.). And/or, the memory 109 may include a high-speed random access memory and may also include a non-volatile memory, for example, at least one magnetic disk storage device, flash memory device, or other volatile solid-state storage devices.

The processor 110 is a control center of the mobile terminal, connecting various parts of the entire mobile terminal through various interfaces and lines. By running or executing software programs and/or modules stored in the memory 109 and calling data stored in the memory 109, it performs various functions of the mobile terminal and processes data, thereby monitoring the mobile terminal as a whole. The processor 110 may include one or more processing units. Preferably, the processor 110 may integrate an application processor and a modem processor. Optionally, the application processor mainly handles the operating system, the user interface, and the application program, etc., while the modem processor mainly handles wireless communication. It is understood that the aforementioned modem processor may also not be integrated into the processor 110.

The mobile terminal 100 may further include a power supply 111 (such as a battery) that supplies power to various components. Preferably, the power supply 111 may be logically connected to the processor 110 through a power management system, thereby implementing functions such as charging management, discharging management, and power consumption management through the power management system.

Although not shown in FIG. 1, the mobile terminal 100 may further include a Bluetooth module, etc., which will not be detailed here.

For the convenience of understanding the embodiments of the present application, a communication network system on which the mobile terminal of the present application is based is described below.

Please refer to FIG. 2, which is an architecture diagram of a communication network system provided by an embodiment of the present application. The communication network system is a NR (New Radio, New Radio) system of universal mobile communication technology. The NR system includes a UE (User Equipment, User Equipment) 201, an E-UTRAN (Evolved UMTS Terrestrial Radio Access Network, Evolved UMTS Terrestrial Radio Access Network) 202, an EPC (Evolved Packet Core, Evolved Packet Core) 203, and an operator's IP service 204, which are sequentially connected in communication.

Optionally, the UE 201 may be the aforementioned terminal device 100, which will not be detailed here.

The E-UTRAN 202 includes an eNodeB 2021 and other eNodeB 2022, etc. Optionally, the eNodeB 2021 may be connected to other eNodeB 2022 via a backhaul (backhaul) (such as an X2 interface). The eNodeB 2021 is connected to the EPC 203 and may provide the UE 201 with access to the EPC 203.

The EPC 203 may include an MME (Mobility Management Entity, Mobility Management Entity) 2031, a HSS (Home Subscriber Server, Home Subscriber Server) 2032, other MME 2033, a SGW (Serving Gateway, Serving Gateway) 2034, a PGW (Packet Data Network Gateway, Packet Data Network Gateway) 2035, and a PCRF (Policy and Charging Rules Function, Policy and Charging Rules Function) 2036, etc. Optionally, the MME 2031 is a control node that handles signaling between the UE 201 and the EPC 203, providing bearer and connection management. The HSS 2032 is configured to provide some registers to manage functions such as a home location register (not shown in the figure) and stores some user-specific information such as service features, data rates, etc. All user data can be sent via the SGW 2034. The PGW 2035 may provide IP address allocation for the UE 201 and other functions. The PCRF 2036 is a policy and charging control policy decision point for service data flows and IP bearer resources. It selects and provides available policy and charging control decisions for the policy and charging enforcement function (not shown in the figure).

The IP service 204 may include an Internet, an intranet, an IMS (IP Multimedia Subsystem, IP Multimedia Subsystem) or other IP services, etc.

Although the above uses the LTE system as an example for introduction, those skilled in the art should understand that the present application is not only applicable to the LTE system, but also to other wireless communication systems, such as a GSM, a CDMA2000, a WCDMA, a TD-SCDMA, 5G, and a future new network system (such as 6G), etc., which are not limited here.

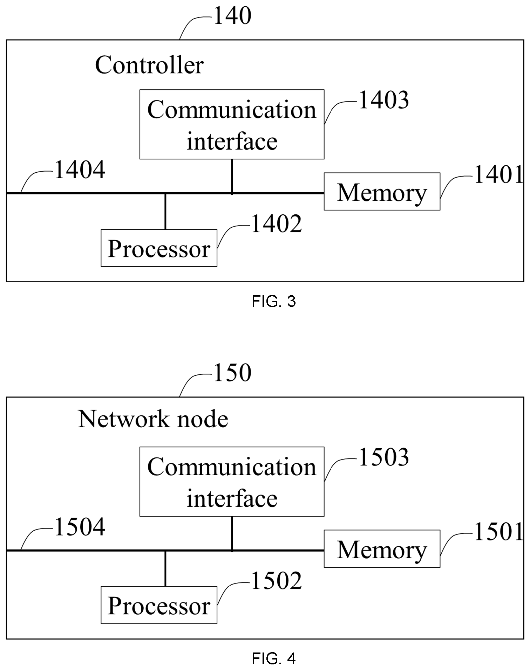

FIG. 3 is a schematic diagram of a hardware structure of a controller 140 provided by the present application. The controller 140 includes: a memory 1401 and a processor 1402. The memory 1401 is configured to store a program instruction, and the processor 1402 is configured to call the program instruction in the memory 1401 to execute the steps performed by the controller in the first method embodiment. The implementation principles and beneficial effects are similar and will not be detailed here.

Optionally, the aforementioned controller further includes a communication interface 1403, which may be connected to the processor 1402 via a bus 1404. The processor 1402 may control the communication interface 1403 to implement the receiving and transmitting functions of the controller 140.

FIG. 4 is a schematic diagram of a hardware structure of a network node 150 provided by the present application. The network node 150 includes: a memory 1501 and a processor 1502. The memory 1501 is configured to store a program instruction, and the processor 1502 is configured to call the program instruction in the memory 1501 to execute the steps performed by the master node in the first method embodiment. The implementation principles and beneficial effects are similar and will not be detailed here.

Optionally, the aforementioned controller further includes a communication interface 1503, which may be connected to the processor 1502 via a bus 1504. The processor 1502 may control the communication interface 1503 to implement the receiving and transmitting functions of the network node 150.

The integrated modules implemented in the form of software functional modules as described above may be stored in a computer-readable storage medium. The software functional modules are stored in a storage medium, which includes several instructions to enable a computer device (which may be a personal computer, a server, a network device, etc.) or a processor (English: processor) to perform some steps of the methods in various embodiments of the present application.

In the embodiments, implementation may be entirely or partially through software, hardware, firmware, or a combination thereof. When implemented in software, it may be entirely or partially embodied as a computer program product. The computer program product includes one or more computer instructions. When loaded and executed on a computer, the computer program instructions entirely or partially generate the processes or functions according to the embodiments of the present application. The computer may be a general-purpose computer, a special-purpose computer, a computer network, or other programmable devices. The computer instruction may be stored in a storage medium or transmitted from one storage medium to another storage medium. For example, the computer instruction may be transmitted from a website site, a computer, a server, or a data center to another website site, computer, server, or data center via wired means (for example, coaxial cable, optical fiber, digital subscriber line (DSL)) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid-state disk, solid-state disk, SSD), etc.

Various embodiments of the present application are proposed based on the hardware structure of the aforementioned mobile terminal and the communication network system.

Technical terms involved in the embodiments:

CSI: Channel State Information, Channel State Information;
CSI-RS: Channel State Information-Reference Signal, Channel state information reference signal;
NES: Network Energy Saving, Network Energy Saving;
SD: Spatial Domain, Spatial Domain;
Adaptation: Adaptation;
sub-configuration: sub-configuration;
PDSCH: Physical Downlink Shared Channel, Physical Downlink Shared Channel.

First Embodiment

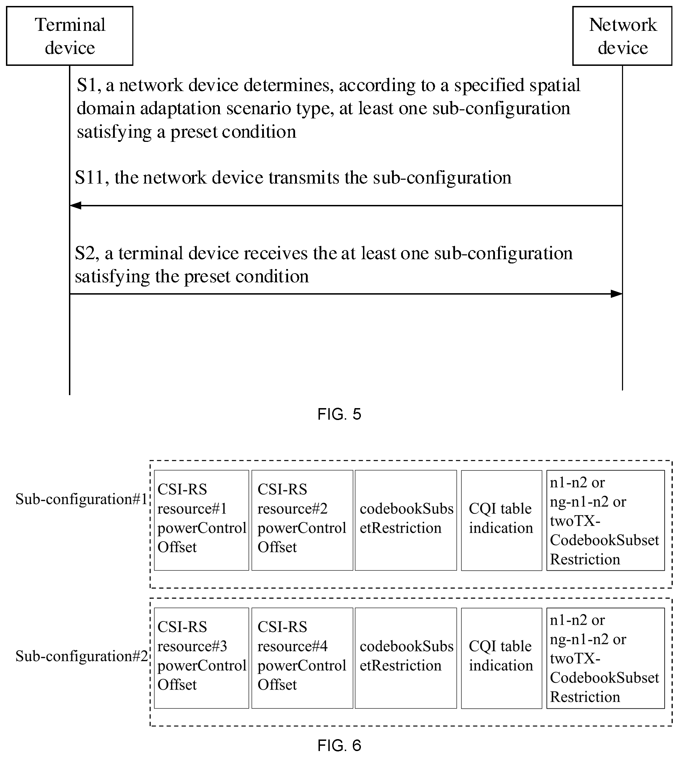

Referring to FIG. 5, which is a schematic interaction flowchart between a network device and a terminal device in a configuration determination method according to a first embodiment. The configuration determination method of this embodiment of the present application includes the following steps:

S1: a network device determines, according to a specified spatial domain adaptation scenario type, at least one sub-configuration satisfying a preset condition.

S11: the network device transmits the sub-configuration.

S2: a terminal device receives the at least one sub-configuration satisfying the preset condition, where the sub-configuration is determined by the network device according to the specified spatial domain adaptation scenario type.

Optionally, the network device may be a base station, etc. The network device determines at least one sub-configuration satisfying a preset condition according to a specified spatial domain adaptation scenario type and transmits the sub-configuration. The terminal device receives the at least one sub-configuration satisfying the preset condition to perform CSI measurement and reporting based on the sub-configuration. Therefore, the problem of how to configure sub-configurations related to spatial domain and power domain in Type 1 SD adaptation and Type 2 SD adaptation scenarios can be solved, thereby enabling the terminal device to achieve reasonable CSI measurement and reporting.

Optionally, the spatial domain adaptation scenario type includes: a Type 1 spatial domain adaptation scenario and/or a Type 2 spatial domain adaptation scenario.

Optionally, the Type 1 SD (Spatial Domain, Spatial Domain) adaptation scenario refers to a scenario in which all antenna elements associated with a logical antenna port are simultaneously enabled or disabled.

Optionally, the Type 2 SD adaptation scenario refers to a scenario in which a portion of antenna elements associated with a logical antenna port are enabled or disabled.

Optionally, the sub-configurations are contained in a channel state information report configuration.

Optionally, a channel state information report report includes at least one sub-configuration.

Optionally, the sub-configurations are contained in a channel state information resource configuration.

Optionally, each sub-configuration corresponds to a spatial domain adaptation mode.

Optionally, each sub-configuration is associated with at least one CSI-RS resource.

Optionally, channel state information reference signal resource index associated with each sub-configuration are different.

Optionally, channel state information reference signal resource indices associated with multiple sub-configurations are the same.

Optionally, for a Type 1 spatial domain adaptation scenario, the network device may determine the at least one sub-configuration satisfying the preset condition according to the Type 1 spatial domain adaptation scenario.

Optionally, for a Type 1 spatial domain adaptation scenario, channel state information reference signal resource indices associated with multiple sub-configurations are the same, that is, multiple sub-configurations may be associated with the same CSI-RS resource.

Optionally, for a Type 1 spatial domain adaptation scenario, each sub-configuration is associated with at least one CSI-RS resource.

Optionally, for a Type 1 spatial domain adaptation scenario, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with an indication of a channel quality indicator table;
each sub-configuration being associated with a power control offset value;
each sub-configuration being associated with a panel identifier;
all sub-configurations being associated with the same report quantity, the same report frequency configuration and/or the same codebook type.

Optionally, for a Type 2 spatial domain adaptation scenario, the network device may determine the at least one sub-configuration satisfying the preset condition according to the Type 2 spatial domain adaptation scenario.

Optionally, for a Type 2 spatial domain adaptation scenario, channel state information reference signal resource indices associated with each sub-configuration are different, that is, each sub-configuration is associated with different CSI-RS resources.

Optionally, for a Type 2 spatial domain adaptation scenario, each sub-configuration is associated with at least one CSI-RS resource. For example, each sub-configuration is associated with two CSI-RS resources.

Optionally, for a Type 2 spatial domain adaptation scenario, satisfying the preset condition includes at least one of the following:

each sub-configuration being associated with a first codebook configuration;
each sub-configuration being associated with a list of channel state information reference signal resource indices;
each sub-configuration being associated with an indication of a channel quality indicator table;
each sub-configuration being associated with a power control offset value;
all sub-configurations being associated with the same report quantity, the same report frequency configuration, the same rank indicator restriction and/or the same codebook type.

Optionally, power control offset (powerControlOffset) represents a power control offset value between resource elements of a PDSCH and non-zero power channel state information reference signal resource elements.

Optionally, the power control offset value includes at least one of the following: a difference relative to a common power control offset value for all sub-configurations, a difference relative to a power control offset value of a first reference sub-configuration, or an actual power control offset value of each sub-configuration.

Optionally, the first reference sub-configuration is the sub-configuration with the largest number of ports among all sub-configurations.

Optionally, the first codebook configuration includes at least one of the following: n1-n2 configuration for typeI-SinglePanel, typeI-SinglePanel-codebookSubsetRestriction-i2, or ng-n1-n2 configuration for typeI-MultiPanel.

Optionally, for a Type 1 spatial domain adaptation scenario, at least one of N1, N2, O1, or O2 associated with each sub-configuration is different.

Optionally, for a Type 2 spatial domain adaptation scenario, the values of N1, N2, O1, and O2 for each sub-configuration are the same.

Optionally, if the number of CSI-RS ports corresponding to the sub-configuration is 2, typeI-SinglePanel-codebookSubsetRestriction-i2 restricts an available codebook of the sub-configuration.

Through the above solution in this embodiment, the network device determines at least one sub-configuration satisfying a preset condition according to a specified spatial domain adaptation scenario type, and the terminal device receives the sub-configuration to determine or generate a channel state information report based on the sub-configuration. Through the technical solution of the present application, the network device can determine configuration elements of each sub-configuration corresponding to different spatial domain adaptation modes based on the spatial domain adaptation scenario type, and can also achieve valid configurations of the determined configuration elements of each sub-configuration, facilitating the terminal device to perform CSI measurement and reporting based on each sub-configuration corresponding to different spatial domain adaptation modes. Therefore, it further facilitates the network device (such as a base station) to adjust the number of transmission ports and power of the physical downlink shared channel in real time according to network energy saving requirements and CSI measurement results under different spatial domain adaptation scenarios, ultimately achieving network energy saving.

Second Embodiment

Based on the first embodiment of the present application, this embodiment further discloses the configuration determination method in the aforementioned embodiment, mainly for a configuration determination method under a Type 2 SD adaptation scenario.

Optionally, the network device determines and transmits at least one sub-configuration satisfying a preset condition according to a specified spatial domain adaptation scenario type, and the terminal device receives the at least one sub-configuration satisfying the preset condition.

Optionally, for the Type 2 spatial domain adaptation scenario, the network device may determine the at least one sub-configuration satisfying the preset condition according to Type 2 spatial domain adaptation scenario.

Optionally, the sub-configurations are contained in a channel state information report configuration.

Optionally, a channel state information report report includes at least one of the sub-configurations.

Optionally, satisfying the preset condition includes at least one of the following:

each sub-configuration being associated with a first codebook configuration;
each sub-configuration being associated with a list of channel state information reference signal resource indices;
each sub-configuration being associated with an indication of a channel quality indicator table;
each sub-configuration being associated with a power control offset value;
all sub-configurations being associated with the same report quantity, the same report frequency configuration, the same rank indicator restriction and/or the same codebook type.

Optionally, each sub-configuration is associated with at least one CSI-RS resource. For example, as shown in FIG. 6, each sub-configuration is associated with two CSI-RS resources. Optionally, sub-configuration #1 is associated with CSI-RS resource #1 and CSI-RS resource #2, and sub-configuration #2 is associated with CSI-RS resource #3 and CSI-RS resource #4.

Optionally, each sub-configuration is associated with a list of channel state information reference signal resource indices, which is used to indicate at least one CSI-RS resource associated with each sub-configuration.

Optionally, CSI-RS resources associated with the same sub-configuration have the same power control offset value.

Optionally, the power control offset value configurations of the sub-configurations are not entirely the same, that is, the power control offset value configurations of some sub-configurations are different, or the power control offset value configurations of some sub-configurations are the same.

Optionally, the first codebook configuration includes at least one of the following:

n1-n2 configuration for typel-SinglePanel (for example, higher layer parameter n1-n2);
typel-SinglePanel-codebookSubsetRestriction-i2;
ng-n1-n2 configuration for typel-MultiPanel (for example, higher layer parameter ng-n1-n2).

Optionally, if the number of CSI-RS ports corresponding to the sub-configuration is 2, typel-SinglePanel-codebookSubsetRestriction-i2 may further be used to determine the available codebook range of the sub-configuration for 2 antenna ports.

Optionally, the first codebook configuration further includes: two-transmit-antenna codebook subset restriction (for example, a higher layer parameter twoTX-CodebookSubsetRestriction), which is only used to determine the available codebook range of the sub-configuration for 2 antenna ports.

Optionally, if the number of CSI-RS ports corresponding to the sub-configuration is 2, the two-transmit-antenna codebook subset restriction may further be used to determine the available codebook range of the sub-configuration for 2 antenna ports.

Scenario examples are as follows.

Optionally, for a Type 2 spatial domain adaptation scenario, CSI-RS resources associated with each sub-configuration in a channel state information reference signal resource set have the same number of antenna ports.

Optionally, each spatial domain adaptation mode corresponds to a sub-configuration.

Optionally, each sub-configuration is associated with a list of channel state information reference signal resource indices.

Optionally, each sub-configuration is associated with an indication of a channel quality indicator table.

Optionally, each sub-configuration is associated with a power control offset value.

Optionally, the power control offset value is an actual power control offset value of each sub-configuration.

Optionally, all sub-configurations are associated with the same codebook type.

Optionally, each sub-configuration is associated with a first codebook configuration.

Optionally, the first codebook configuration includes n1-n2 configuration for typel-SinglePanel and typel-SinglePanel-codebookSubsetRestriction-i2.

Optionally, for a Type 2 spatial domain adaptation scenario, the values of N1, N2, O1, and O2 for each sub-configuration are the same. For example, there are two sub-configurations, namely sub-configuration #1 and sub-configuration #2, the values of {N1, N2, O1, O2} of sub-configuration #1 are completely the same as values of {N1, N2, O1, O2} of sub-configuration #2. That is, the value of N1 in sub-configuration #1 is the same as the value of N1 in sub-configuration #2, the value of N2 in sub-configuration #1 is the same as the value of N2 in sub-configuration #2, the value of O1 in sub-configuration #1 is the same as the value of O1 in sub-configuration #2, and the value of O2 in sub-configuration #1 is the same as the value of O2 in sub-configuration #2.

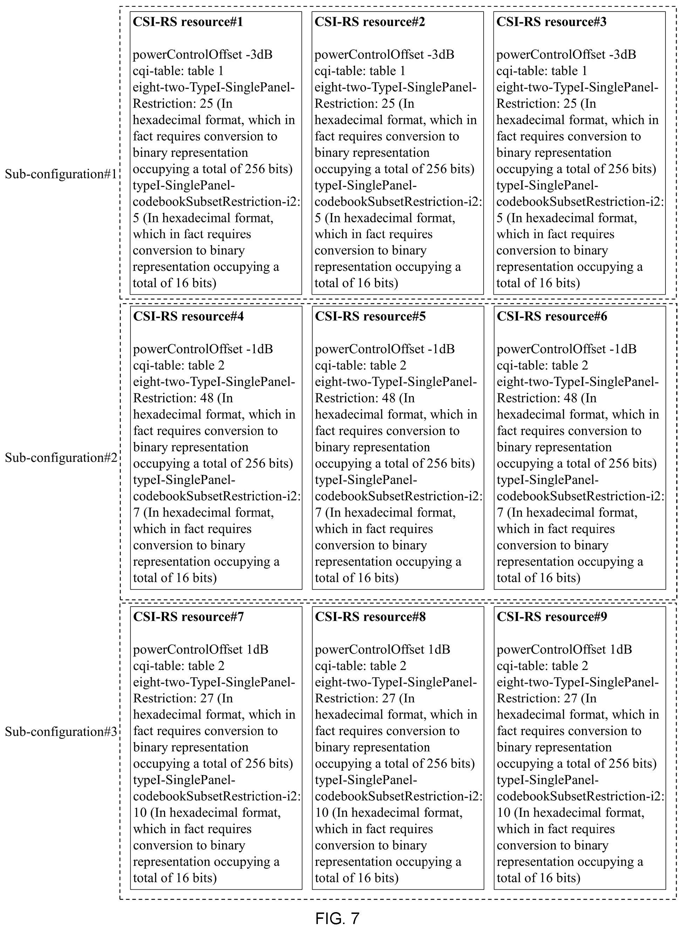

Optionally, assuming the spatial domain adaptation scenario is type 2, the number of antenna ports of the CSI-RS associated with all sub-configurations is 32, the number of sub-configurations is 3, the lists of the CSI-RS resource indices associated with the three sub-configurations are {1, 2, 3}, {4, 5, 6}, {7, 8, 9}, respectively. The channel quality indicator tables corresponding to the three sub-configurations are {table 1, table 2, table 1}, respectively. The actual power control offset values corresponding to the three sub-configurations are {-3dB, -1dB, 1dB}, respectively. The codebook types of the three sub-configurations are all typel-Singlepanel. The parameters of n1-n2 for typel-SinglePanel corresponding to the three sub-configurations, eight-two-typel-Singlepanel-Restriction, are 25 (hexadecimal), 48 (hexadecimal) and 27 (hexadecimal), respectively. The parameters of i2 codebook subset restriction for typel-SinglePanel corresponding to the three sub-configurations, typel-Singlepanel-codebookSubsetRestriction-i2, are 5 (hexadecimal), 7 (hexadecimal), and 10 (hexadecimal), respectively. Referring to FIG. 7 for details.

Optionally, when the codebook type is typel-Singlepanel, the possible values of N1 and N2 obtained according to the first codebook configuration can be referred in Table 1.

Optionally, when the codebook type is typel-Singlepanel, the relationship between O1, O2 and N1, N2 related to codebook configuration can be referred in Table 1.

Optionally, for a Type 2 spatial domain adaptation scenario, the values of N1, N2, O1 and O2 in the codebook configuration of each sub-configuration are the same, but the specific values of n1-n2 are different. For example, assuming the number of ports for all sub-configurations is 32, and N1 corresponding to 32 ports is 8, N2 corresponding to 32 ports is 2, then, it can be seen according to Table 1 that O1 corresponding to 32 ports is 4, and O2 corresponding to 32 ports is 4.

Table 1: supported combinations of $(N_1, N_2)$ and $(O_1, O_2)$

| Number of CSI-RS antenna ports, $P_{\text{CSI-RS}}$ | $(N_1,N_2)$ | $(O_1,O_2)$ |
|---|---|---|
| 4 | (2,1) | (4,1) |
| 8 | (2,2) | (4,4) |
| | (4,1) | (4,1) |
| 12 | (3,2) | (4,4) |
| | (6,1) | (4,1) |
| 16 | (4,2) | (4,4) |
| | (8,1) | (4,1) |
| 24 | (4,3) | (4,4) |
| | (6,2) | (4,4) |
| | (12,1) | (4,1) |
| 32 | (4,4) | (4,4) |
| | (8,2) | (4,4) |
| | (16,1) | (4,1) |

Through the above technical solution of this embodiment, the network device can determine valid configurations of configuration elements for each sub-configuration under the Type 2 spatial domain adaptation scenario according to the characteristics of the Type 2 spatial domain adaptation scenario, and the terminal device receives the sub-configuration for the Type 2 spatial domain adaptation scenario to generate or determine a channel state information report based on the sub-configuration, thereby enabling the network device to effectively obtain channel state information for each sub-configuration under the Type 2 spatial domain adaptation scenario according to the characteristics of the Type 2 spatial domain adaptation scenario, facilitating the network device to reasonably select a sub-configuration meeting energy-saving requirements.

Third Embodiment

Based on any of the above embodiments of the present application, this embodiment further discloses the configuration determination method in the aforementioned embodiments, mainly for another configuration determination method under a Type 2 SD adaptation scenario.

The network device determines and transmits at least one sub-configuration satisfying a preset condition according to a specified spatial domain adaptation scenario type, and the terminal device receives the at least one sub-configuration satisfying the preset condition.

Optionally, for the Type 2 spatial domain adaptation scenario, the network device may determine the at least one sub-configuration satisfying the preset condition according to Type 2 spatial domain adaptation scenario.

Optionally, the sub-configurations are contained in a channel state information report configuration.

Optionally, a channel state information report report includes at least one of the sub-configurations.

Optionally, satisfying the preset condition includes at least one of the following:

each sub-configuration being associated with a first codebook configuration;
each sub-configuration being associated with a list of channel state information reference signal resource indices;
each sub-configuration being associated with an indication of a channel quality indicator table;
each sub-configuration being associated with a power control offset value;
all sub-configurations being associated with the same report quantity, the same report frequency configuration, the same rank indicator restriction and/or the same codebook type.

Optionally, each sub-configuration is associated with a list of channel state information reference signal resource indices.

Optionally, CSI-RS resources associated with the same sub-configuration have the same power control offset value.

Optionally, power control offset (powerControlOffset) represents a power control offset value between resource elements of a PDSCH and non-zero power channel state information reference signal resource elements.

Optionally, the power control offset value configurations of at least two sub-configurations are different.

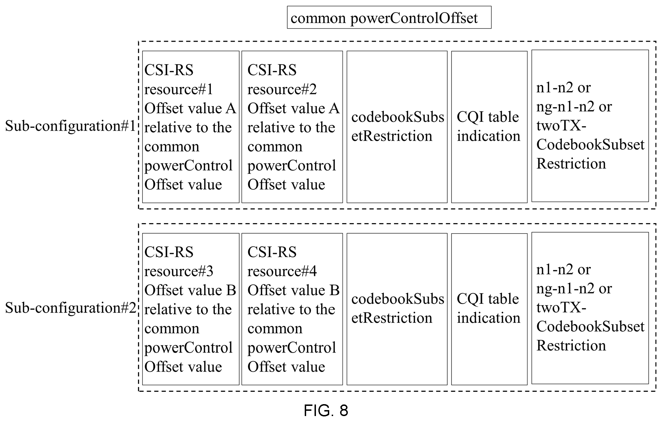

Optionally, the power control offset value may be a difference relative to a common power control offset value for all sub-configurations. For example, as shown in FIG. 8, for sub-configuration #1, A is a difference between the actual power control offset value of sub-configuration #1 and the common power control offset value of all sub-configurations. B is a difference between the actual power control offset value of sub-configuration #2 and the common power control offset value of all sub-configurations. Optionally, the actual power control offset value of sub-configuration #1 = A + common power control offset (common powerControlOffset) value of all sub-configurations, the actual power control offset value of sub-configuration #2 = B + common power control offset (common powerControlOffset) value of all sub-configurations.

Optionally, the first codebook configuration includes at least one of the following: n1-n2 configuration for typel-SinglePanel (for example, higher layer parameter n1-n2), typel-SinglePanel-codebookSubsetRestriction-i2, or ng-n1-n2 configuration for typel-MultiPanel (for example, higher layer parameter ng-n1-n2).

Optionally, for a Type 2 spatial domain adaptation scenario, the values of N1, N2, O1, and O2 for each sub-configuration are the same. For example, there are two sub-configurations, namely sub-configuration #1 and sub-configuration #2, the values of {N1, N2, O1, O2} of sub-configuration #1 are completely the same as values of {N1, N2, O1, O2} of sub-configuration #2. That is, the value of N1 in sub-configuration #1 is the same as the value of N1 in sub-configuration #2, the value of N2 in sub-configuration #1 is the same as the value of N2 in sub-configuration #2, the value of O1 in sub-configuration #1 is the same as the value of O1 in sub-configuration #2, and the value of O2 in sub-configuration #1 is the same as the value of O2 in sub-configuration #2.

Optionally, if the number of CSI-RS ports corresponding to the sub-configuration is 2, typel-SinglePanel-codebookSubsetRestriction-i2 may further be used to determine the available codebook range of the sub-configuration for 2 antenna ports.

Optionally, the first codebook configuration further includes: two-transmit-antenna codebook subset restriction (for example, a higher layer parameter twoTX-CodebookSubsetRestriction), which is only used to determine the available codebook range of the sub-configuration for 2 antenna ports.

Optionally, if the number of CSI-RS ports corresponding to the sub-configuration is 2, the two-transmit-antenna codebook subset restriction may further be used to determine the available codebook range of the sub-configuration for 2 antenna ports.

Scenario examples are as follows.

Optionally, for a Type 2 spatial domain adaptation scenario, CSI-RS resources associated with each sub-configuration in a channel state information reference signal resource set have the same number of antenna ports.

Optionally, each spatial domain adaptation mode corresponds to a sub-configuration.

Optionally, each sub-configuration is associated with a list of channel state information reference signal resource indices.

Optionally, each sub-configuration is associated with an indication of a channel quality indicator table.

Optionally, each sub-configuration is associated with a power control offset value.

Optionally, the power control offset value is a difference relative to a common power control offset value for all sub-configurations.

Optionally, all sub-configurations are associated with the same codebook type.

Optionally, each sub-configuration is associated with a first codebook configuration.

Optionally, the first codebook configuration includes n1-n2 configuration for typel-SinglePanel and typel-SinglePanel-codebookSubsetRestriction-i2.

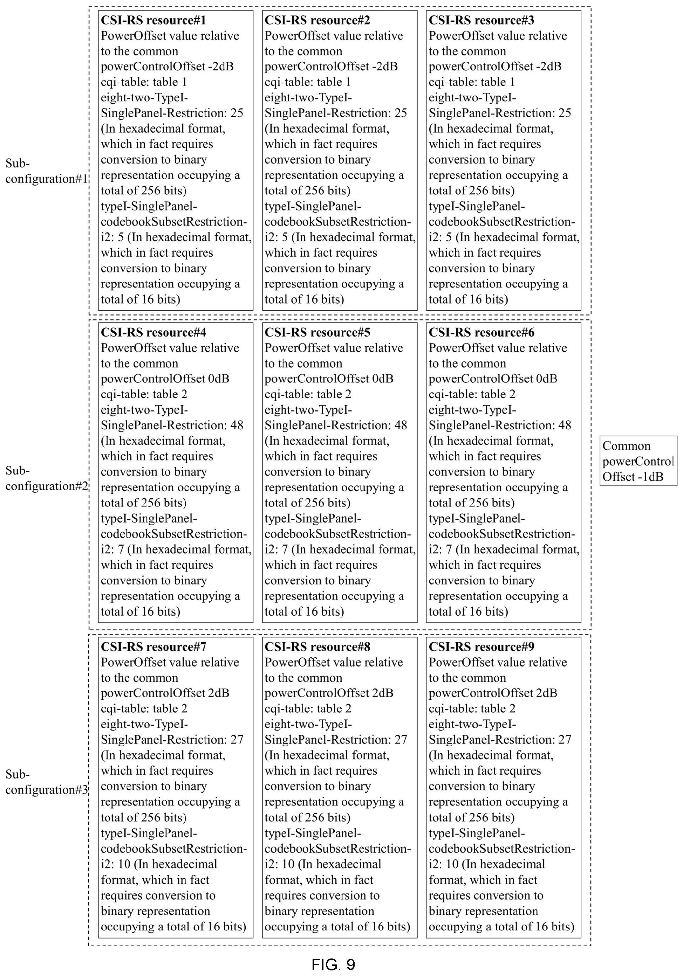

Optionally, assuming the spatial domain adaptation scenario is Type 2, the number of antenna ports of the CSI-RS (channel State Information Reference Signal, Channel State information reference signal) associated with all sub-configurations is 32, the number of sub-configurations is 3, the lists of the CSI-RS resource indices associated with the three sub-configurations are {1, 2, 3}, {4, 5, 6}, {7, 8, 9}, respectively. The channel quality indicator tables corresponding to the three sub-configurations are {table 1, table 2, table 1}, respectively. The common power control offset (common powerControlOffset) value of three sub-configurations is -1dB. The power control offset values associated with the three sub-configurations are {-2, 0, 2}, respectively, that is, the actual power control offset values corresponding to the three sub-configurations are {-3dB = (-2-1)dB, -1dB = (0-1)dB, 1dB = (2-1)dB}, respectively. The codebook types of the three sub-configurations are all typel-Singlepanel. The parameters of n1-n2 for typel-SinglePanel corresponding to the three sub-configurations, eight-two-typel-Singlepanel-Restriction, are 25 (hexadecimal), 48 (hexadecimal) and 27 (hexadecimal), respectively. The parameters of i2 codebook subset restriction for typel-SinglePanel corresponding to the three sub-configurations, typeI-Singlepanel-codebookSubsetRestriction-i2, are 5 (hexadecimal), 7 (hexadecimal), 10 (hexadecimal) respectively. Referring to FIG. 9 for details.

Optionally, when the codebook type is typeI-SinglePanel, the possible values of N1 and N2 obtained according to the first codebook configuration can be referred in Table 1.

Optionally, when the codebook type is typeI-SinglePanel, the relationship between O1, O2 and N1, N2 related to codebook configuration can be referred in Table 1.

Optionally, for a Type 2 spatial domain adaptation scenario, the values of N1, N2, O1 and O2 in the codebook configuration of each sub-configuration are the same, but the specific values of n1-n2 are different. For example, assuming the number of ports for all sub-configurations is 32, and N1 corresponding to 32 ports is 8, N2 corresponding to 32 ports is 2, then, it can be seen according to Table 1 that O1 corresponding to 32 ports is 4, and O2 corresponding to 32 ports is 4.

Through the above technical solution of this embodiment, the network device can determine valid configurations of configuration elements for each sub-configuration under the Type 2 spatial domain adaptation scenario according to the characteristics of the Type 2 spatial domain adaptation scenario, and the terminal device receives the sub-configuration to generate or determine a channel state information report based on the sub-configuration. Optionally, the power control offset of each sub-configuration under the Type 2 spatial domain adaptation scenario may be a difference relative to a common power control offset value for all sub-configurations, thereby saving the number of bits required for the network device to configure each sub-configuration under the Type 2 spatial domain adaptation scenario, while still achieving valid configurations of the configuration elements for each sub-configuration under the Type 2 spatial domain adaptation scenario.

Fourth Embodiment

Based on any of the above embodiments of the present application, this embodiment further discloses the configuration determination method in the aforementioned embodiments, mainly for a configuration determination method under a Type 1 SD adaptation scenario.

Optionally, the network device determines and transmits at least one sub-configuration satisfying a preset condition according to a specified spatial domain adaptation scenario type, and the terminal device receives the at least one sub-configuration satisfying the preset condition.

Optionally, for the Type 1 spatial domain adaptation scenario, the network device may determine the at least one sub-configuration satisfying the preset condition according to spatial domain adaptation scenario Type 1.

Optionally, a channel state information report report includes at least one of the sub-configurations.

Optionally, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with a power control offset value;
each sub-configuration being associated with a panel identifier;
all sub-configurations being associated with the same report quantity, the same report frequency configuration, the same indication of channel quality indicator table and/or the same codebook type.

Optionally, the first codebook configuration includes at least one of the following: n1-n2 configuration for typeI-SinglePanel, typeI-SinglePanel-codebookSubsetRestriction-i2, or ng-n1-n2 configuration for typeI-MultiPanel.

Optionally, for a Type 1 spatial domain adaptation scenario, at least one of N1, N2, O1, or O2 associated with each sub-configuration is different. For example, there are two sub-configurations, namely sub-configuration #1 and sub-configuration #2, the values of {N1, N2, O1, O2} of sub-configuration #1 are different from values of {N1, N2, O1, O2} of sub-configuration #2. That is, the value of N1 in sub-configuration #1 is different from the value of N1 in sub-configuration #2, and/or, the value of N2 in sub-configuration #1 is different from the value of N2 in sub-configuration #2, and/or, the value of O1 in sub-configuration #1 is different from the value of O1 in sub-configuration #2, and/or, the value of O2 in sub-configuration #1 is different from the value of O2 in sub-configuration #2.

Optionally, if the number of CSI-RS ports corresponding to the sub-configuration is 2, typeI-SinglePanel-codebookSubsetRestriction-i2 restricts an available codebook of the sub-configuration.

Optionally, the first reference sub-configuration is the sub-configuration with the largest number of ports among all sub-configurations.

Optionally, for a Type 1 spatial domain adaptation scenario, if the number of ports for the first reference sub-configuration is greater than or equal to 4, then the codebook configuration of a sub-configuration with 2 ports that is associated with the same CSI-RS resource as the first reference sub-configuration is uniquely configured by the i2 codebook subset restriction for typeI-SinglePanel (corresponding to higher layer parameter typeI-Singlepanel-code-

bookSubsetRestriction-i2). That is, for such a scenario, the codebook configuration of the sub-configuration with 2 ports is independent of the higher layer parameter n1-n2, and also independent of the two-transmit-antenna codebook subset restriction (for example, higher layer parameter twoTX-CodebookSubsetRestriction).

Optionally, for a Type 1 spatial domain adaptation scenario, if the number of ports for the first reference sub-configuration is greater than or equal to 4, then for the codebook configuration of a sub-configuration with 2 ports that is associated with the same CSI-RS resource, N1, N2, O1 and O2 satisfy N1 = N2 = O1 = O2 = 1.

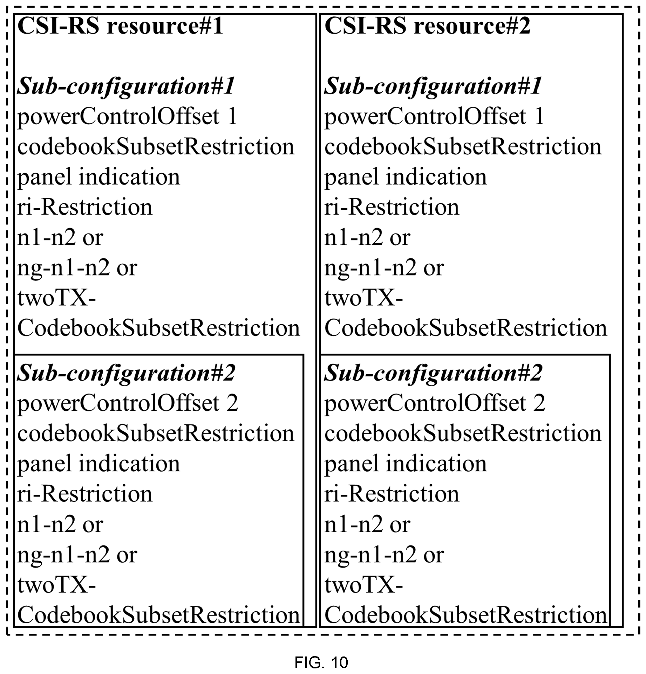

Optionally, each sub-configuration is associated with at least one CSI-RS resource, and at least two sub-configurations are associated with the same CSI-RS resource. For example, as shown in FIG. 10, each sub-configuration is associated with two CSI-RS resources. Optionally, sub-configuration #1 is associated with CSI-RS resource #1 and CSI-RS resource #2, and sub-configuration #2 is also associated with CSI-RS resource #1 and CSI-RS resource #2.

Optionally, each sub-configuration is associated with a list of channel state information reference signal resource indices, which is used to indicate a CSI-RS resource associated with each sub-configuration.

Optionally, CSI-RS resources associated with the same sub-configuration have the same power control offset value.

Optionally, the power control offset value configurations of the sub-configurations are not entirely the same, that is, the power control offset value configurations of some sub-configurations are different, or the power control offset value configurations of some sub-configurations are the same.

Optionally, a power control offset list may be associated within a CSI-RS resource to indicate the actual power control offset value of each sub-configuration.

Optionally, each sub-configuration is associated with a panel identifier.

Optionally, the panel identifier includes at least one of the following:

each panel associated with each sub-configuration corresponds to a bit value;
an index offset value between a first panel associated with each sub-configuration and a first panel associated with a first reference sub-configuration.

Optionally, multiple panels associated with each sub-configuration being uniformly distributed.

Optionally, for the Type 1 spatial domain adaptation scenario, when the codebook type is typeI-MultiPanel, the panels associated with each sub-configuration are not completely identical. That is, the panels associated with some sub-configurations are the same, and the panels associated with some sub-configurations are different.

Scenario examples are as follows.

Optionally, for a Type 1 spatial domain adaptation scenario, the numbers of antenna ports of the CSI-RS resources corresponding to each sub-configuration in a channel state information reference signal resource set are different.

Optionally, each spatial domain adaptation mode corresponds to a sub-configuration.

Optionally, each sub-configuration is associated with at least one CSI-RS resource, and all sub-configurations are associated with the same CSI-RS resource index.

Optionally, all sub-configurations are associated with the same list of channel state information reference signal resource indices.

Optionally, each sub-configuration is associated with a rank indicator restriction.

Optionally, the power control offset value is the actual power control offset value of each sub-configuration.

Optionally, all sub-configurations are associated with the same codebook type.

Optionally, each sub-configuration is associated with a first codebook configuration.

Optionally, the first codebook configuration includes n1-n2 configuration for typeI-SinglePanel and typeI-SinglePanel-codebookSubsetRestriction-i2.

Optionally, the values of N1, N2, O1 and O2 in the codebook configuration of each sub-configuration may be different, but N1, N2, O1 and O2 conform to the definitions in the above table 1.

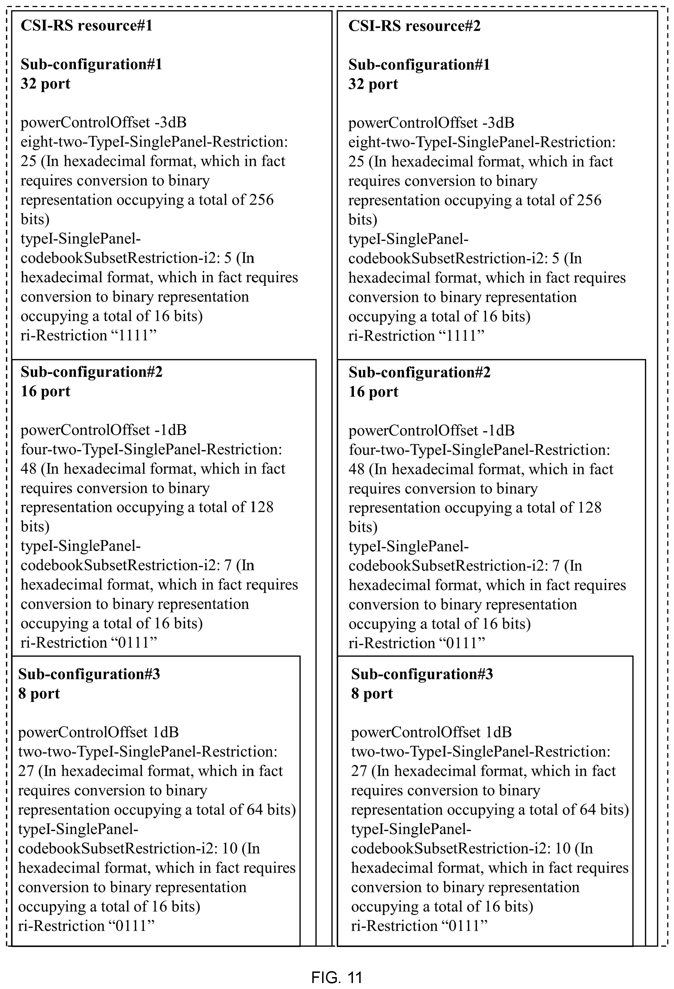

Optionally, assuming the spatial domain adaptation scenario is Type 1, the number of sub-configurations is 3, and the numbers of antenna ports of the CSI-RS corresponding to the three sub-configurations are 32 ports, 16 ports, and 8 ports, respectively. The resource indices of the two CSI-RS resources simultaneously associated with the three sub-configurations is {1, 2}. The actual power control offset values corresponding to the three sub-configurations are {-3dB, -1dB, 1dB}, respectively. The codebook types of the three sub-configurations are all typeI-Singlepanel. The n1-n2 parameters corresponding to the three sub-configurations are: eight-two-typeI-Singlepanel-Restriction = 25 (hexadecimal), four-two-typeI-Singlepanel-Restriction = 48 (hexadecimal), two-two-typeI-Singlepanel-Restriction = 27 (hexadecimal), respectively. The parameters of i2 codebook subset restriction for typeI-SinglePanel corresponding to the three sub-configurations, typeI-Singlepanel-codebookSubsetRestriction-i2, are 5 (hexadecimal), 7 (hexadecimal), and 10 (hexadecimal), respectively. The rank indicator restrictions (corresponding to parameter ri-Restriction) corresponding to the three sub-configurations are {'1111', '0111', '0111'}, respectively. Referring to FIG. 11 for details.

Optionally, the frequency domain resources occupied by the CSI-RS of the remaining sub-configurations, other than the first reference sub-configuration, are a subset of the frequency domain resources occupied by the CSI-RS of the first reference sub-configuration. For example, in this embodiment, the frequency domain resources occupied by 16-port CSI-RS and 8-port CSI-RS are a subset of the frequency domain resources occupied by 32-port CSI-RS.

Through the technical solution of this embodiment, the network device can determine valid configurations of configuration elements for each sub-configuration under the Type 1 spatial domain adaptation scenario according to the characteristics of the Type 1 spatial domain adaptation scenario. For example, all sub-configurations are configured with the same list of channel state information reference signal resource indices, each sub-configuration is configured with different rank indicator restrictions and/or different N1, N2 configurations, etc. Then, the terminal device receives the sub-configuration for the Type 1 spatial domain adaptation scenario to generate or determine a channel state information report based on the sub-configuration, thereby enabling the network device to effectively obtain channel state information for each sub-configuration under the Type 1 spatial domain adaptation scenario according to the characteristics of the type 1 spatial domain adaptation scenario, facilitating the network device to reasonably select a sub-configuration meeting energy-saving requirements.

Fifth Embodiment

Based on any of the above embodiments of the present application, this embodiment further discloses the configuration determination method in the aforementioned embodiments, mainly for another configuration determination method under a Type 1 SD adaptation scenario.

The network device determines and transmits at least one sub-configuration satisfying a preset condition according to a specified spatial domain adaptation scenario type, and the terminal device receives the at least one sub-configuration satisfying the preset condition.

Optionally, for the Type 1 spatial domain adaptation scenario, the network device may determine the at least one sub-configuration satisfying the preset condition according to spatial domain adaptation scenario Type 1.

Optionally, a channel state information report report includes at least one of the sub-configurations.

Optionally, satisfying the preset condition includes at least one of the following:

   each sub-configuration being associated with a first codebook configuration;
   each sub-configuration being associated with a rank indicator restriction;
   each sub-configuration being associated with a list of channel state information reference signal resource indices;
   each sub-configuration being associated with a power control offset value;
   each sub-configuration being associated with a panel identifier;
   all sub-configurations being associated with the same report quantity, the same report frequency configuration, the same indication of channel quality indicator table and/or the same codebook type.

Optionally, each sub-configuration is associated with at least one CSI-RS resource, and at least two sub-configurations are associated with the same CSI-RS resource.

Optionally, CSI-RS resources associated with the same sub-configuration have the same power control offset value.

Optionally, power control offset (powerControlOffset) represents a power control offset value between resource elements of a PDSCH and non-zero power channel state information reference signal resource elements.

Optionally, the power control offset value configurations of the sub-configurations are not entirely the same, that is, the power control offset value configurations of some sub-configurations are different, or the power control offset value configurations of some sub-configurations are the same.

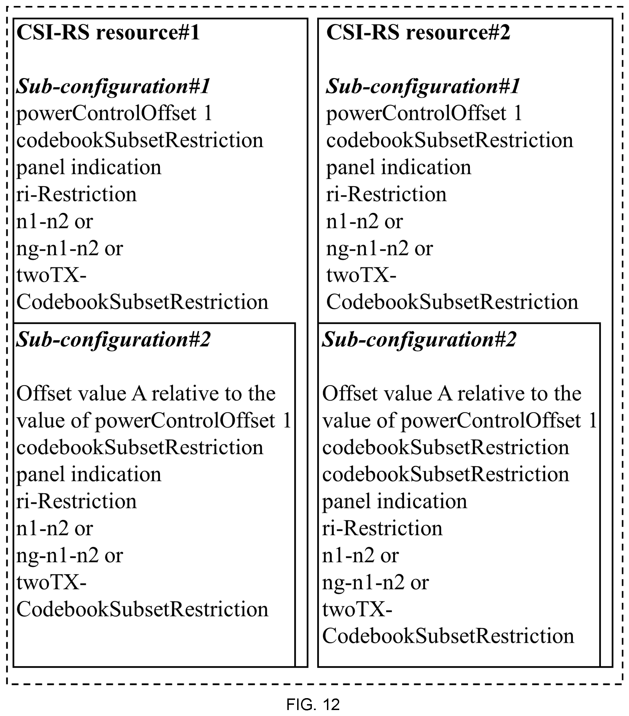

Optionally, the first reference sub-configuration is the sub-configuration with the largest number of ports among all sub-configurations. Optionally, the power control offset value may be a difference from the actual power control offset value of the first reference sub-configuration. For example, as shown in FIG. 12, assuming sub-configuration #1 is a first reference sub-configuration, A is a difference between the actual power control offset value of sub-configuration #2 and the actual power control offset value of the first reference sub-configuration (that is, sub-configuration #1). In other words, the actual power control offset value of sub-configuration #2 = A + actual power control offset (common powerControlOffset) value of the first reference sub-configuration.

Optionally, for a Type 1 spatial domain adaptation scenario, if the number of ports for the first reference sub-configuration is greater than or equal to 4, then the codebook configuration of a sub-configuration with 2 ports that is associated with the same CSI-RS resource as the first reference sub-configuration is uniquely configured by the i2 codebook subset restriction for typel-SinglePanel (corresponding to higher layer parameter typel-Singlepanel-codebookSubsetRestriction-i2). That is, for such a scenario, the codebook configuration of the sub-configuration with 2 ports is independent of the higher layer parameter n1-n2, and also independent of the two-transmit-antenna codebook subset restriction (for example, higher layer parameter twoTX-CodebookSubsetRestriction).

Optionally, for a Type 1 spatial domain adaptation scenario, if the number of ports for the first reference sub-configuration is greater than or equal to 4, then for the codebook configuration of a sub-configuration with 2 ports that is associated with the same CSI-RS resource, N1, N2, O1 and O2 satisfy N1 = N2 = O1 = O2 = 1.

Optionally, for a Type 1 spatial domain adaptation scenario, at least one of N1, N2, O1, or O2 associated with each sub-configuration is different. For example, there are two sub-configurations, namely sub-configuration #1 and sub-configuration #2, the values of {N1, N2, O1, O2} of sub-configuration #1 are different from values of {N1, N2, O1, O2} of sub-configuration #2. That is, the value of N1 in sub-configuration #1 is different from the value of N1 in sub-configuration #2, and/or, the value of N2 in sub-configuration #1 is different from the value of N2 in sub-configuration #2, and/or, the value of O1 in sub-configuration #1 is different from the value of O1 in sub-configuration #2, and/or, the value of O2 in sub-configuration #1 is different from the value of O2 in sub-configuration #2.

Optionally, for the Type 1 spatial domain adaptation scenario, when the codebook type is typeI-MultiPanel, the panels associated with each sub-configuration are not completely identical.

Optionally, each sub-configuration is associated with a panel identifier.

Optionally, the panel identifier includes at least one of the following:

> each panel associated with each sub-configuration corresponds to a bit value;
> an index offset value between a first panel associated with each sub-configuration and a first panel associated with a first reference sub-configuration.

Optionally, multiple panels associated with each sub-configuration being uniformly distributed.

Scenario examples are as follows.

Optionally, for a Type 1 spatial domain adaptation scenario, the numbers of antenna ports of the CSI-RS resources corresponding to each sub-configuration in a channel state information reference signal resource set are different.

Optionally, each spatial domain adaptation mode corresponds to a sub-configuration.

Optionally, each sub-configuration is associated with at least one CSI-RS resource, and all sub-configurations are associated with the same CSI-RS resource index.

Optionally, the power control offset value may be a difference from the actual power control offset value of the first reference sub-configuration.

Optionally, the rank indicator restrictions associated with the each sub-configuration are not completely identical.

Optionally, all sub-configurations are associated with the same codebook type.

Optionally, each sub-configuration is associated with a first codebook configuration.

Optionally, the first codebook configuration includes n1-n2 configuration for typeI-SinglePanel and typeI-SinglePanel-codebookSubsetRestriction-i2.

Optionally, the values of N1, N2, O1 and O2 in the codebook configuration of each sub-configuration may be different, but N1, N2, O1 and O2 conform to the definitions in the above table 1.

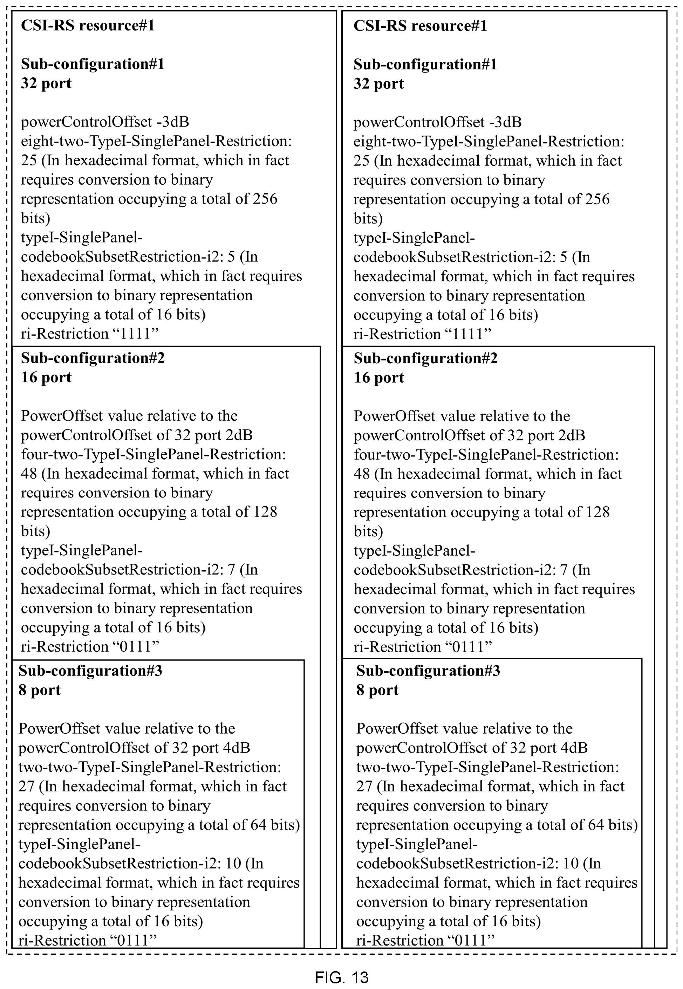

Optionally, assuming the spatial domain adaptation scenario is Type 1, the number of sub-configurations is 3, and the numbers of antenna ports of the CSI-RS corresponding to the three sub-configurations are 32 ports, 16 ports, and 8 ports, respectively. The resource indices of the two CSI-RS resources simultaneously associated with the three sub-configurations is {1, 2}. Assuming the sub-configuration with 32 ports is a first reference sub-configuration, then the power control offset values associated with the three sub-configurations are {-3, 2, 4}, respectively, where -3 is the actual power control offset value of the sub-configuration with 32 ports, and {2, 4} are the differences between the actual powerOffset values of the sub-configuration with 16 ports and the sub-configuration with 8 ports and the actual power control offset value of the first reference sub-configuration, respectively. That is, the actual power control offset values of the three sub-configurations are {-3dB, -1dB = (2-3)dB, 1 dB = (4-3)dB}, respectively. The codebook types of the three sub-configurations are all typeI-Singlepanel. The n1-n2 parameters corresponding to the three sub-configurations are: eight-two-typeI-Singlepanel-Restriction = 25 (hexadecimal), four-two-typeI-Singlepanel-Restriction = 48 (hexadecimal), two-two-typeI-Singlepanel-Restriction = 27 (hexadecimal), respectively. The parameters of i2 codebook subset restriction for typeI-SinglePanel corresponding to the three sub-configurations, typeI-Singlepanel-codebookSubsetRestriction-i2, are 5 (hexadecimal), 7 (hexadecimal), and 10 (hexadecimal), respectively. The rank indicator restrictions (corresponding to parameter ri-Restriction) corresponding to the three sub-configurations are {'1111', '0111', '0111'}, respectively. Referring to FIG. 13 for details.

Optionally, the frequency domain resources occupied by the CSI-RS of the remaining sub-configurations, other than the first reference sub-configuration, are a subset of the frequency domain resources occupied by the CSI-RS of the first reference sub-configuration. For example, in this embodiment, the frequency domain resources occupied by 16-port CSI-RS and 8-port CSI-RS are a subset of the frequency domain resources occupied by 32-port CSI-RS.

Through the technical solution of this embodiment, the network device can determine valid configurations of configuration elements for each sub-configuration under the Type 1 spatial domain adaptation scenario according to the characteristics of the Type 1 spatial domain adaptation scenario, then the terminal device receives the sub-configuration to generate or determine a channel state information report based on the sub-configuration. Optionally, the power control offset of each remaining sub-configuration other than the first reference sub-configuration under the Type 1 spatial domain adaptation scenario may be the difference between said power control offset and the power control offset value of the first reference sub-configuration, thereby saving the number of bits required for the network device to configure each sub-configuration under the Type 1 spatial domain adaptation scenario, while still achieving valid configurations of the configuration elements for each sub-configuration under the Type 1 spatial domain adaptation scenario.

Sixth Embodiment

Based on any of the above embodiments of the present application, this embodiment further discloses the configuration determination method in the aforementioned embodiments, mainly for another configuration determination method under a Type 1 SD adaptation scenario.

The network device determines and transmits at least one sub-configuration satisfying a preset condition according to a specified spatial domain adaptation scenario type, and the terminal device receives the at least one sub-configuration satisfying the preset condition.

Optionally, for the Type 1 spatial domain adaptation scenario, the network device may determine the at least one sub-configuration satisfying the preset condition according to spatial domain adaptation scenario Type 1.

Optionally, a channel state information report report includes at least one of the sub-configurations.

Optionally, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with a power control offset value;
each sub-configuration being associated with a panel identifier;
all sub-configurations being associated with the same report quantity, the same report frequency configuration, the same indication of channel quality indicator table and/or the same codebook type.

Optionally, the first codebook configuration includes at least one of the following: n1-n2 configuration for typel-SinglePanel, typeI-SinglePanel-codebookSubsetRestriction-i2, or ng-n1-n2 configuration for typel-MultiPanel.

Optionally, if the number of CSI-RS ports corresponding to the sub-configuration is 2, typel-SinglePanel-codebookSubsetRestriction-i2 restricts an available codebook of the sub-configuration.

Optionally, the first reference sub-configuration is the sub-configuration with the largest number of ports among all sub-configurations.

Optionally, for a Type 1 spatial domain adaptation scenario, if the number of ports for the first reference sub-configuration is greater than or equal to 4, then the codebook configuration of a sub-configuration with 2 ports that is associated with the same CSI-RS resource as the first reference sub-configuration is uniquely configured by the i2 codebook subset restriction for typel-SinglePanel (corresponding to higher layer parameter typel-Singlepanel-codebookSubsetRestriction-i2). That is, for such a scenario, the codebook configuration of the sub-configuration with 2 ports is independent of the higher layer parameter n1-n2, and also independent of the two-transmit-antenna codebook subset restriction (for example, higher layer parameter two TX -CodebookSubsetRestriction).

Optionally, for a Type 1 spatial domain adaptation scenario, if the number of ports for the first reference sub-configuration is greater than or equal to 4, then for the codebook configuration of a sub-configuration with 2 ports that is associated with the same CSI-RS resource, N1, N2, O1 and O2 satisfy N1 = N2 = O1 = O2 = 1.

Optionally, for the Type 1 spatial domain adaptation scenario, when the codebook type is typel-MultiPanel, the panels associated with each sub-configuration are not completely identical.

Optionally, each sub-configuration is associated with a panel identifier.

Optionally, the panel identifier includes at least one of the following:

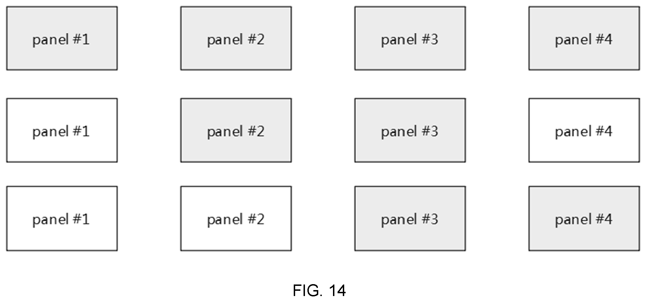

each panel associated with each sub-configuration corresponds to a bit value;
an index offset value between a first panel associated with each sub-configuration and a first panel associated with a first reference sub-configuration. For example, as shown in FIG. 14, assuming a first row represents the panels used by the first reference sub-configuration, with panel indices being panel #1 to panel #4. The second row and the third row represent the panels used by the remaining sub-configurations other than the first reference sub-configuration, respectively. The index offset value between the panel indices used by the sub-configuration in the second row and the panels used by the first reference sub-configuration is 1, therefore, the panel indices used by the sub-configuration in the second row are panel #(1+1) and panel #(2+1). The index offset value between the panel indices used by the sub-configuration in the second row and the panels used by the first reference sub-configuration is 2, therefore, the panel indices used by the sub-configuration in the second row are panel #(1+2) and panel #(2+2).

Optionally, multiple panels associated with each sub-configuration being uniformly distributed.

Scenario examples are as follows.

Optionally, for a Type 1 spatial domain adaptation scenario, the numbers of antenna ports of the CSI-RS resources corresponding to each sub-configuration in a channel state information reference signal resource set are different.

Optionally, each spatial domain adaptation mode corresponds to a sub-configuration.

Optionally, each sub-configuration is associated with at least one CSI-RS resource, and all sub-configurations are associated with the same CSI-RS resource index.

Optionally, the power control offset value may be a difference from the actual power control offset value of the first reference sub-configuration.

Optionally, the rank indicator restrictions associated with the each sub-configuration are not completely identical.

Optionally, all sub-configurations are associated with the same codebook type.

Optionally, each sub-configuration is associated with a first codebook configuration.

Optionally, the first codebook configuration includes n1-n2 configuration for typeI-SinglePanel and typeI-SinglePanel-codebookSubsetRestriction-i2.

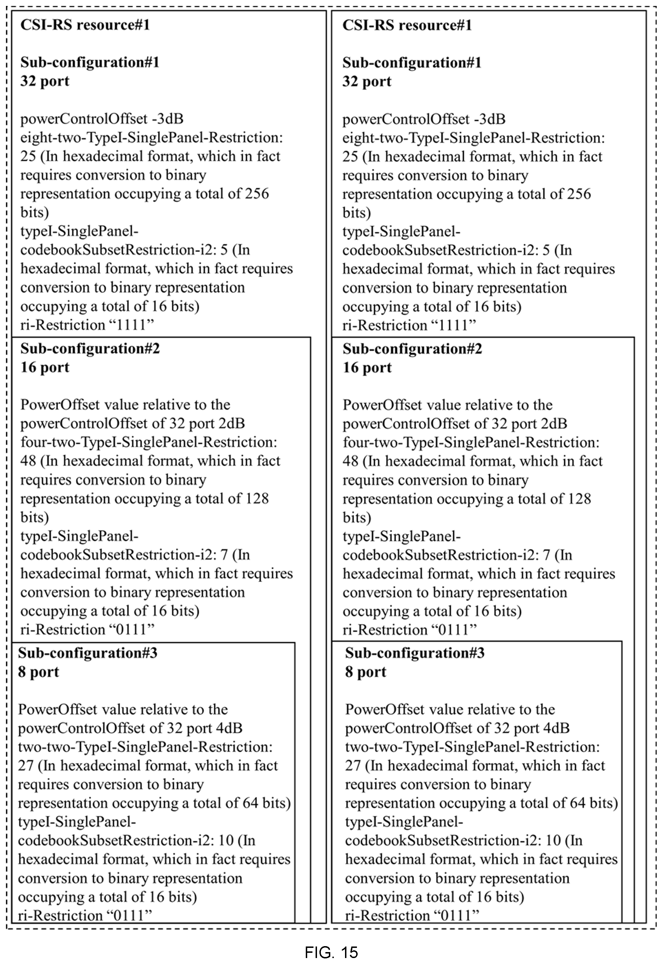

Optionally, assuming the spatial domain adaptation scenario is Type 1, the number of sub-configurations is 3, and the numbers of antenna ports of the CSI-RS corresponding to the three sub-configurations are 32 ports, 16 ports, and 8 ports, respectively. The resource indices of the two CSI-RS resources simultaneously associated with the three sub-configurations is {1, 2}. Assuming the sub-configuration with 32 ports is a first reference sub-configuration, then the power control offset values associated with the three sub-configurations are {-3, 2, 4}, respectively, where -3 is the actual power control offset value of the sub-configuration with 32 ports, and {2, 4} are the differences between the actual powerOffset values of the sub-configuration with 16 ports and the sub-configuration with 8 ports and the actual power control offset value of the first reference sub-configuration, respectively. That is, the actual power control offset values of the three sub-configurations are {-3dB, -1dB = (2-3)dB, 1dB = (4-3)dB}, respectively. The codebook types of the three sub-configurations are all typeI-MultiPanel. The ng-n1-n2 parameters corresponding to the three sub-configurations are: four-two-two-TypeI-Multipanel-Restriction = 25 (hexadecimal), four-two-one-TypeI-MultiPanel-Restriction = 48 (hexadecimal), two-two-one-TypeI-Multipanel-Restriction = 27 (hexadecimal), respectively. The rank indicator restrictions (corresponding to parameter ri-Restriction) corresponding to the three sub-configurations are {'1111', '0111', '0111'}, respectively. Referring to FIG. 15 for details.

Optionally, each sub-configuration is associated with a panel identifier.

Optionally, the panel identifier is an index offset value between a first panel associated with each sub-configuration and a first panel associated with a first reference sub-configuration. For example, assuming the number of bits occupied by the panel identifier is 2, then bits "00" represents that the offset value between the index of the first panel used by the current sub-configuration and the index of the first panel associated with the first reference sub-configuration is 0, and bits "01" represents that the offset value between the index of the first panel used by the current sub-configuration and the index of the first panel associated with the first reference sub-configuration is 1, and so on.

Optionally, assuming the sub-configuration with 32 ports is the first reference sub-configuration, and an index of a first panel is 1. Assuming the number of panels for the sub-configuration with 16 ports is 4 and its panel indication is "00", then the first panel occupied by the sub-configuration with 16 ports has the same index as the first panel occupied by the sub-configuration with 32 ports, that is, the panel indices of the sub-configuration with 16 ports are {1, 2, 3, 4}. Assuming the number of panels for the sub-configuration with 8 ports is 2 and its panel indication is "01", then the index offset value between the first panel occupied by the sub-configuration with 8 ports and the first panel occupied by the sub-configuration with 32 ports is 1, that is, the panel indices of the sub-configuration with 8 ports are {1+1, 1+2} = {2, 3}.

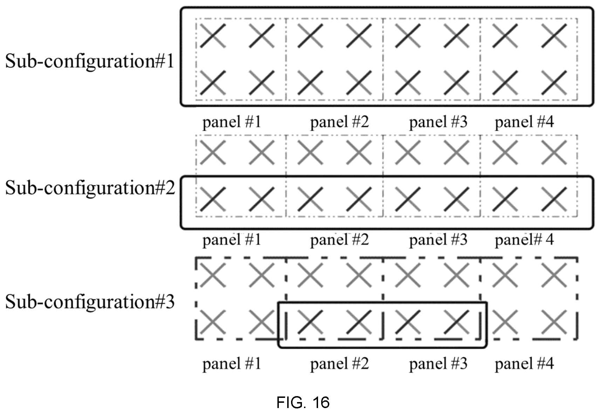

Optionally, referring to FIG. 16. In FIG. 16, each diagonal line corresponds to a polarization direction of an antenna port. In FIG. 16, the available antenna ports in the applicable panels of each sub-configuration are those within the solid-line box, and antenna ports outside the solid-line box are not used for this sub-configuration.

Optionally, when the codebook type is typeI-MultiPanel, the values of N1, N2, O1 and O2 in the codebook configuration of each sub-configuration may be different, but N1, N2, O1 and O2 conform to the definitions in the following table 2.

Table 2: supported combinations of $(N_g, N_1, N_2)$ and $(O_1, O_2)$

| Number of CSI-RS antenna ports, $P_{CSI-RS}$ | $(N_g, N_1, N_2)$ | $(O_1, O_2)$ |
| --- | --- | --- |
| 8 | (2,2,1) | (4,1) |

(continued)

| Number of CSI-RS antenna ports, $P_{CSI\text{-}RS}$ | $(N_g, N_1, N_2)$ | $(O_1, O_2)$ |
|---|---|---|
| 16 | (2,4,1) | (4,1) |
| | (4,2,1) | (4,1) |
| | (2,2,2) | (4,4) |
| 32 | (2,8,1) | (4,1) |
| | (4,4,1) | (4,1) |
| | (2,4,2) | (4,4) |
| | (4,2,2) | (4,4) |

Through the technical solution of this embodiment, the network device can determine valid configurations of configuration elements for each sub-configuration under the Type 1 spatial domain adaptation scenario according to the characteristics of the Type 1 spatial domain adaptation scenario, then the terminal device receives the sub-configuration to generate or determine a channel state information report based on the sub-configuration. Optionally, the panel identifier of each remaining sub-configuration other than the first reference sub-configuration under the Type 1 spatial domain adaptation scenario may be an index offset value from the first panel associated with the first reference sub-configuration, thereby saving the number of bits required for the network device to configure each sub-configuration under the Type 1 spatial domain adaptation scenario, while still achieving valid configurations of the configuration elements for each sub-configuration under the Type 1 spatial domain adaptation scenario.

Seventh Embodiment

Based on any of the above embodiments of the present application, this embodiment further discloses the configuration determination method in the aforementioned embodiments, mainly for another configuration determination method under a Type 1 SD adaptation scenario.

The network device determines and transmits at least one sub-configuration satisfying a preset condition according to a specified spatial domain adaptation scenario type, and the terminal device receives the at least one sub-configuration satisfying the preset condition.

Optionally, for the Type 1 spatial domain adaptation scenario, the network device may determine the at least one sub-configuration satisfying the preset condition according to spatial domain adaptation scenario Type 1.

Optionally, a channel state information report report includes at least one of the sub-configurations.

Optionally, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with an indication of a channel quality indicator table;
each sub-configuration being associated with a power control offset value;
each sub-configuration being associated with a panel identifier;
all sub-configurations being associated with the same report quantity, the same report frequency configuration, the same indication of channel quality indicator table and/or the same codebook type.

Optionally, the first codebook configuration includes at least one of the following: n1-n2 configuration for typeI-SinglePanel, typeI-SinglePanel-codebookSubsetRestriction-i2, or ng-n1-n2 configuration for typeI-MultiPanel.

Optionally, for a Type 1 spatial domain adaptation scenario, when the codebook type is typeI-MultiPanel, the panels associated with each sub-configuration are not completely identical.

Optionally, each sub-configuration is associated with a panel identifier.

Optionally, in the panel identifier, each panel associated with each sub-configuration corresponds to a bit value.

Optionally, multiple panels associated with each sub-configuration being uniformly distributed.

Scenario examples are as follows.

Optionally, for a Type 1 spatial domain adaptation scenario, the numbers of antenna ports of the CSI-RS resources corresponding to each sub-configuration in a channel state information reference signal resource set are different.

Optionally, each spatial domain adaptation mode corresponds to a sub-configuration.

Optionally, each sub-configuration is associated with at least one CSI-RS resource, and all sub-configurations are associated with the same CSI-RS resource index.

Optionally, the power control offset value may be a difference from the actual power control offset value of the first reference sub-configuration.

Optionally, the rank indicator restrictions associated with the each sub-configuration are not completely identical.

Optionally, all sub-configurations are associated with the same codebook type.

Optionally, each sub-configuration is associated with a first codebook configuration.

Optionally, the first codebook configuration includes n1-n2 configuration for typeI-Singlepanel and typeI-SinglePanel-codebookSubsetRestriction-i2.

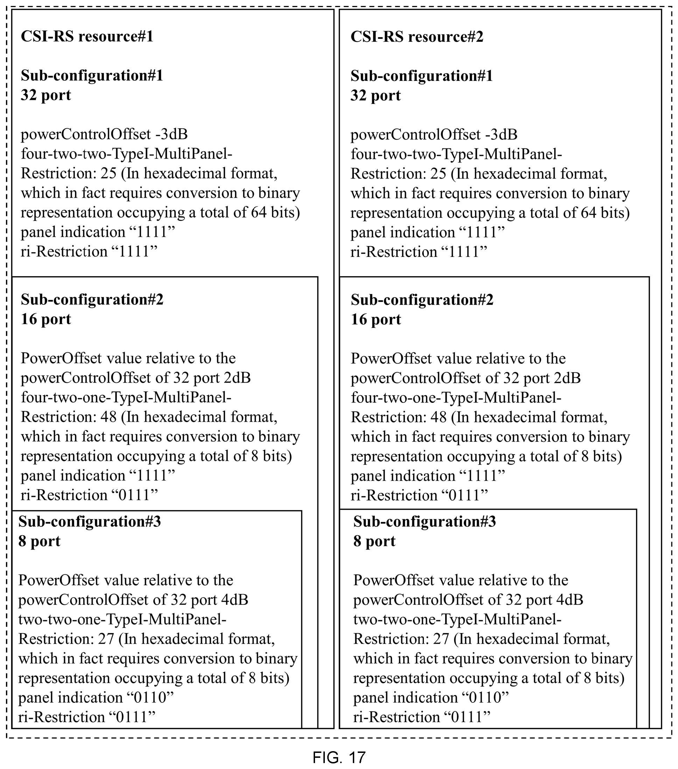

Optionally, assuming the spatial domain adaptation scenario is Type 1, the number of sub-configurations is 3, and the numbers of antenna ports of the CSI-RS corresponding to the three sub-configurations are 32 ports, 16 ports, and 8 ports, respectively. The resource indices of the two CSI-RS resources simultaneously associated with the three sub-configurations is {1, 2}. Assuming the sub-configuration with 32 ports is a first reference sub-configuration, then the power control offset values associated with the three sub-configurations are {-3, 2, 4} dB, respectively, where -3 is the actual power control offset value of the sub-configuration with 32 ports, and {2, 4} are the differences between the actual power offset values of the sub-configuration with 16 ports and the sub-configuration with 8 ports and the actual power control offset value of the first reference sub-configuration, respectively. That is, the actual power control offset values of the three sub-configurations are {-3dB, -1dB = (2-3)dB, 1dB = (4-3)dB}, respectively. The codebook types of the three sub-configurations are all typeI-MultiPanel. The ng-n1-n2 parameters corresponding to the three sub-configurations are: four-two-two-Type1-MultiPanel-Restriction = 25 (hexadecimal), four-two-one-Type1-MultiPanel-Restriction = 48 (hexadecimal), two-two-one-TypeI-MultiPanel-Restriction = 27 (hexadecimal), respectively. The rank indicator restrictions (corresponding to parameter ri-Restriction) corresponding to the three sub-configurations are {'1111', '0111', '0111'}, respectively. Referring to FIG. 17 for details.

Optionally, each sub-configuration is associated with a panel identifier.

Optionally, in the panel identifier, each panel associated with each sub-configuration corresponds to a bit value. For example, assuming the number of bits occupied by the panel identifier is 4, then bits "1111" represents that the current configuration uses all 4 panels, and bits "0110" represents that the current configuration only uses panel #2 and panel #3.

Optionally, assuming the number of panels for both the sub-configuration with 32 ports and the sub-configuration with 16 ports is 4 and their panel indications are both "1111", then the 4 panels occupied by the sub-configuration with 16 ports are the same as the 4 panels of the sub-configuration with 32 ports. The number of panels for the sub-configuration with 8 ports is 2 and its panel indication is "0110", then the 2 panels occupied by the sub-configuration with 8 ports are panel #2 and panel #3, respectively. The panels occupied by each sub-configuration are shown in FIG. 16. In FIG. 16, each diagonal line corresponds to a polarization direction of an antenna port. In FIG. 16, the available antenna ports in the applicable panels of each sub-configuration are those within the solid-line box, and antenna ports outside the solid-line box are not used for this sub-configuration.

Optionally, when the codebook type is typeI-MultiPanel, the values of N1, N2, O1 and O2 in the codebook configuration of each sub-configuration may be different, but N1, N2, O1 and O2 conform to the definitions in the above table 2.

Through the technical solution of this embodiment, the network device can determine valid configurations of configuration elements for each sub-configuration under the Type 1 spatial domain adaptation scenario according to the characteristics of the Type 1 spatial domain adaptation scenario, then the terminal device receives the sub-configuration to generate or determine a channel state information report based on the sub-configuration. Optionally, the panel(s) corresponding to each sub-configuration are determined through bit mapping under the Type 1 spatial domain adaptation scenario. Compared to the sixth embodiment, it allows for more flexible panel selection, facilitating the network to configure reasonable transmission antenna panels for each sub-configuration based on the current channel environment.

Eighth Embodiment

Based on any of the above embodiments of the present application, this embodiment further discloses the configuration determination method in the aforementioned embodiments, mainly for another configuration determination method under a Type 1 SD adaptation scenario.

The network device determines and transmits at least one sub-configuration satisfying a preset condition according to a specified spatial domain adaptation scenario type, and the terminal device receives the at least one sub-configuration satisfying the preset condition.

Optionally, for the Type 1 spatial domain adaptation scenario, the network device may determine the at least one sub-configuration satisfying the preset condition according to spatial domain adaptation scenario Type 1.

Optionally, a channel state information report report includes at least one of the sub-configurations.

Optionally, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with a power control offset value;
each sub-configuration being associated with a panel identifier;
all sub-configurations being associated with the same report quantity, the same report frequency configuration, the same indication of channel quality indicator table and/or the same codebook type.

Optionally, the first codebook configuration includes at least one of the following: n1-n2 configuration for typeI-SinglePanel, typeI-SinglePanel-codebookSubsetRestriction-i2, or ng-n1-n2 configuration for typeI-MultiPanel.

Optionally, for a Type 1 spatial domain adaptation scenario, at least one of N1, N2, O1, or O2 associated with each sub-configuration is different. For example, there are two sub-configurations, namely sub-configuration #1 and sub-configuration #2, the values of {N1, N2, O1, O2} of sub-configuration #1 are different from values of {N1, N2, O1, O2} of sub-configuration #2. That is, the value of N1 in sub-configuration #1 is different from the value of N1 in sub-configuration #2, and/or, the value of N2 in sub-configuration #1 is different from the value of N2 in sub-configuration #2, and/or, the value of O1 in sub-configuration #1 is different from the value of O1 in sub-configuration #2, and/or, the value of O2 in sub-configuration #1 is different from the value of O2 in sub-configuration #2.

Optionally, if the number of CSI-RS ports corresponding to the sub-configuration is 2, typeI-SinglePanel-codebookSubsetRestriction-i2 restricts an available codebook of the sub-configuration.

Optionally, the first reference sub-configuration is the sub-configuration with the largest number of ports among all sub-configurations.

Optionally, for a Type 1 spatial domain adaptation scenario, if the number of ports for the first reference sub-configuration is greater than or equal to 4, then the codebook configuration of a sub-configuration with 2 ports that is associated with the same CSI-RS resource as the first reference sub-configuration is uniquely configured by the i2 codebook subset restriction for typeI-SinglePanel (corresponding to higher layer parameter typeI-Singlepanel-codebookSubsetRestriction-i2). That is, for such a scenario, the codebook configuration of the sub-configuration with 2 ports is independent of the higher layer parameter n1-n2, and also independent of the two-transmit-antenna codebook subset restriction (for example, higher layer parameter twoTX-CodebookSubsetRestriction).

Optionally, for a Type 1 spatial domain adaptation scenario, if the number of ports for the first reference sub-configuration is greater than or equal to 4, then for the codebook configuration of a sub-configuration with 2 ports that is associated with the same CSI-RS resource, N1, N2, O1 and O2 satisfy N1 = N2 = O1 = O2 = 1.

Optionally, the power control offset value includes at least one of the following: a difference relative to a common power control offset value for all sub-configurations, a difference relative to a power control offset value of a first reference sub-configuration, or an actual power control offset value of each sub-configuration.

Optionally, for the Type 1 spatial domain adaptation scenario, when the codebook type is typeI-MultiPanel, the panels associated with each sub-configuration are not completely identical.

Optionally, each sub-configuration is associated with a panel identifier.

Optionally, the panel identifier includes at least one of the following:

each panel associated with each sub-configuration corresponds to a bit value;
an index offset value between a first panel associated with each sub-configuration and a first panel associated with a first reference sub-configuration. For example, as shown in FIG. 10, assuming a first row represents the panels used by the first reference sub-configuration, with panel indices being panel #1 to panel #4. The second row and the third row represent the panels used by the remaining sub-configurations other than the first reference sub-configuration, respectively. The index offset value between the panel indices used by the sub-configuration in the second row and the panels used by the first reference sub-configuration is 1, therefore, the panel indices used by the sub-configuration in the second row are panel #(1+1) and panel #(2+1). The index offset value between the panel indices used by the sub-configuration in the second row and the panels used by the first reference sub-configuration is 2, therefore, the panel indices used by the sub-configuration in the second row are panel #(1+2) and panel #(2+2).

Optionally, multiple panels associated with each sub-configuration being uniformly distributed.

Scenario examples are as follows.

Optionally, for a Type 1 spatial domain adaptation scenario, the numbers of antenna ports of the CSI-RS resources corresponding to each sub-configuration in a channel state information reference signal resource set are different.

Optionally, each spatial domain adaptation mode corresponds to a sub-configuration.

Optionally, each sub-configuration is associated with at least one CSI-RS resource, and all sub-configurations are associated with the same CSI-RS resource index.

Optionally, the power control offset value may be a difference from the actual power control offset value of the first reference sub-configuration.

Optionally, the rank indicator restrictions associated with the each sub-configuration are not completely identical.

Optionally, all sub-configurations are associated with the same codebook type.

Optionally, each sub-configuration is associated with a first codebook configuration.

Optionally, for a Type 1 spatial domain adaptation scenario, if the number of ports for the first reference sub-configuration is greater than or equal to 4, then the codebook configuration of a sub-configuration with 2 ports that is associated with the same CSI-RS resource as the first reference sub-configuration is uniquely configured by the i2 codebook subset restriction for typel-SinglePanel (corresponding to higher layer parameter typel-Singlepanel-codebookSubsetRestriction-i2). That is, for such a scenario, the codebook configuration of the sub-configuration with 2 ports is independent of the higher layer parameter n1-n2, and also independent of the two-transmit-antenna codebook subset restriction (for example, higher layer parameter two TX -CodebookSubsetRestriction).

Optionally, for a Type 1 spatial domain adaptation scenario, if the number of ports for the first reference sub-configuration is greater than or equal to 4, then for the codebook configuration of a sub-configuration with 2 ports that is associated with the same CSI-RS resource, N1, N2, O1 and O2 satisfy N1 = N2 = O1 = O2 = 1.

Optionally, the values of N1, N2, O1 and O2 in the codebook configuration of each sub-configuration may be different, but N1, N2, O1 and O2 conform to the definitions in the above table 1.

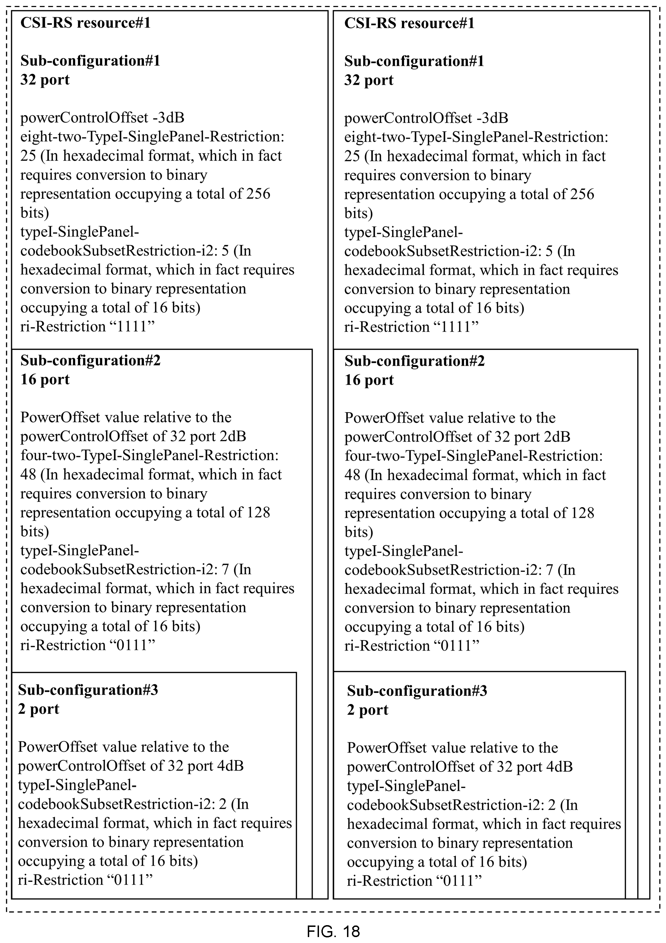

Optionally, assuming the spatial domain adaptation scenario is Type 1, the number of sub-configurations is 3, and the numbers of antenna ports of the CSI-RS corresponding to the three sub-configurations are 32 ports, 16 ports, and 2 ports, respectively. The resource indices of the two CSI-RS resources simultaneously associated with the three sub-configurations is {1, 2}. Assuming the sub-configuration with 32 ports is a first reference sub-configuration, then the power control offset values associated with the three sub-configurations are {-3, 2, 4}, respectively, where -3 is the actual power control offset value of the sub-configuration with 32 ports, and {2, 4} are the differences between the actual power offset values of the sub-configuration with 16 ports and the sub-configuration with 8 ports and the actual power control offset value of the first reference sub-configuration, respectively. That is, the actual power control offset values of the three sub-configurations are {-3dB, -1dB = (2-3)dB, 1dB = (4-3)dB}, respectively. The codebook types of the three sub-configurations are all typel-Singlepanel. The n1-n2 parameters corresponding to the sub-configuration with 32 ports and the sub-configuration with 16 ports are: eight-two-typel-Singlepanel-Restriction = 25 (hexadecimal), four-two-typel-Singlepanel-Restriction = 48 (hexadecimal) respectively. The parameters of i2 codebook subset restriction for typel-SinglePanel corresponding to the three sub-configurations, typel-Singlepanel-codebookSubsetRestriction-i2, are 5 (hexadecimal), 7 (hexadecimal), and 2 (hexadecimal), respectively. The rank indicator restrictions (corresponding to parameter ri-Restriction) corresponding to the three sub-configurations are {'1111', '0111', '0111'}, respectively. Referring to FIG. 18 for details.

Optionally, in this embodiment, the codebook corresponding to the sub-configuration with 2 ports is only defined by the i2 codebook subset restriction for typel-SinglePanel (corresponding to higher layer parameter typel-Singlepanel-codebookSubsetRestriction-i2).

Optionally, for a Type 1 spatial domain adaptation scenario, if the number of ports for the first reference sub-configuration is greater than or equal to 4, then the codebook configuration of a sub-configuration with 2 ports that is associated with the same CSI-RS resource as the first reference sub-configuration is uniquely configured by the i2 codebook subset restriction for typel-SinglePanel (corresponding to higher layer parameter typel-Singlepanel-codebookSubsetRestriction-i2). That is, for such a scenario, the codebook configuration of the sub-configuration with 2 ports is independent of the higher layer parameter n1-n2, and also independent of the two-transmit-antenna codebook subset restriction (for example, higher layer parameter two TX -CodebookSubsetRestriction).

Optionally, the method for configuring the sub-configuration with 2 ports via the typel-SinglePanel-codebookSubsetRestriction-i2 is only applicable when codebookMode=1 and N1 = N2 = O1 = O2 = 1. And the corresponding values for the typel-SinglePanel-codebookSubsetRestriction-i2 are shown in Table 3 and Table 4 below.

Table 3: codebook for 1-layer CSI reporting using antenna ports 3000 to 2999+P_CSI-RS

| codebookMode = 1 | | | |
|---|---|---|---|
| $i_{1,1}$ | $i_{1,2}$ | $i_2$ | |
| $0,1,...,N_1O_1 -1$ | $0,...,N_2O_2 - 1$ | $0,1,2,3$ | $W^{(1)}_{i_{1,1},i_{1,2},i_2}$ |
| where | | | |
| $$W^{(1)}_{l,m,n} = \frac{1}{\sqrt{P_{CSI-RS}}} \begin{bmatrix} v_{l,m} \\ \varphi_n v_{l,m} \end{bmatrix}$$ | | | |

Table 4: codebook for 2-layer CSI reporting using antenna ports 3000 to 2999+P_CSI-RS

| codebookMode = 1 | | | |
|---|---|---|---|
| $i_{1,1}$ | $i_{1,2}$ | $i_2$ | |
| $0,1,...,N_1O_1-1$ | $0,...,N_2O_2 -1$ | $0, 1$ | $W^{(2)}_{i_{1,1},i_{1,1}+k_1,i_{1,2},i_{1,2}+k_2,i_2}$ |
| where | | | |
| $$W^{(2)}_{l,l',m,m',n} = \frac{1}{\sqrt{2P_{CSI-RS}}} \begin{bmatrix} v_{l,m} & v_{l',m'} \\ \varphi_n v_{l,m} & -\varphi_n v_{l',m'} \end{bmatrix}$$ | | | |
| the mapping from $i_{1,3}$ to $k_1$ and $k_2$ is given in Table 5.2.2.2.1-3 in 38.214 | | | |

where,

$$\varphi_n = e^{j\pi n/2};$$

$$v_{l,m} = 1;$$

Optionally, when the codebook type is typel-Singlepanel, codebook configuration of sub-configurations with a number of antenna ports greater than or equal to 4 refer to 3GPP TS 38.214.

Through the technical solution of this embodiment, the network device can determine valid configurations of configuration elements for each sub-configuration under the Type 1 spatial domain adaptation scenario according to the characteristics of the Type 1 spatial domain adaptation scenario, then the terminal device receives the sub-configuration to generate or determine a channel state information report based on the sub-configuration. Optionally, under the Type 1 spatial domain adaptation scenario, if the number of ports for the first reference sub-configuration is greater than or equal to 4, and at least one sub-configuration has 2 ports, then the sub-configuration with 2 ports is configured via the typel-SinglePanel-codebookSubsetRestriction-i2. Compared to using a new, different RRC parameter to configure the configuration with 2 ports, it ensures consistency in the codebook configuration across multiple sub-configurations, avoiding confusion for the terminal when receiving codebook configuration parameters regarding the codebook configuration parameters for sub-configurations with 2 ports, thereby ensuring the reasonable scheduling of the network device.

Ninth Embodiment

Based on any of the above embodiments of the present application, this embodiment further discloses the configuration determination method in the aforementioned embodiments.

The network device determines and transmits at least one sub-configuration satisfying a preset condition according to a specified spatial domain adaptation scenario type, and the terminal device receives the at least one sub-configuration satisfying the preset condition.

Optionally, a channel state information report report includes at least one of the sub-configurations.

Optionally, satisfying the preset condition includes at least one of the following:

each sub-configuration being associated with a first codebook configuration;

each sub-configuration being associated with a rank indicator restriction;

each sub-configuration being associated with a list of channel state information reference signal resource indices;

each sub-configuration being associated with an indication of a channel quality indicator table;

each sub-configuration being associated with a power control offset value;

each sub-configuration being associated with a panel identifier;

all sub-configurations being associated with the same report quantity, the same report frequency configuration and/or the same codebook type.

Optionally, all sub-configurations are associated with the same report frequency configuration, the same report quantity, the same frequency domain range (including a starting resource block position, the length of consecutive occupied resource blocks), and the same CSI-RS density within a resource block, etc.

The configuration principles related to this embodiment can be found in the aforementioned embodiments and details will not be repeated here.

Through the technical solution of the present application, the network device can determine configuration elements of each sub-configuration corresponding to different spatial domain adaptation modes based on the spatial domain adaptation scenario type, and can also achieve valid configurations of the determined configuration elements of each sub-configuration. For example, all sub-configurations are associated with the same report quantity, the same report frequency configuration and/or the same codebook type. Thus, the network device determines and transmits at least one sub-configuration satisfying a preset condition according to a specified spatial domain adaptation scenario type, and the terminal device receives the at least one sub-configuration satisfying the preset condition to generate or determine a channel state information report based on the sub-configuration, thereby enabling the terminal device to perform CSI measurement under different spatial domain adaptation scenarios based on different sub-configurations. It further facilitates the network device (for example, a base station) to adjust the number of transmission ports and power of a physical downlink shared channel in real time according to network energy saving requirements and CSI measurement results under different spatial domain adaptation scenarios, ultimately achieving network energy saving.

Tenth Embodiment

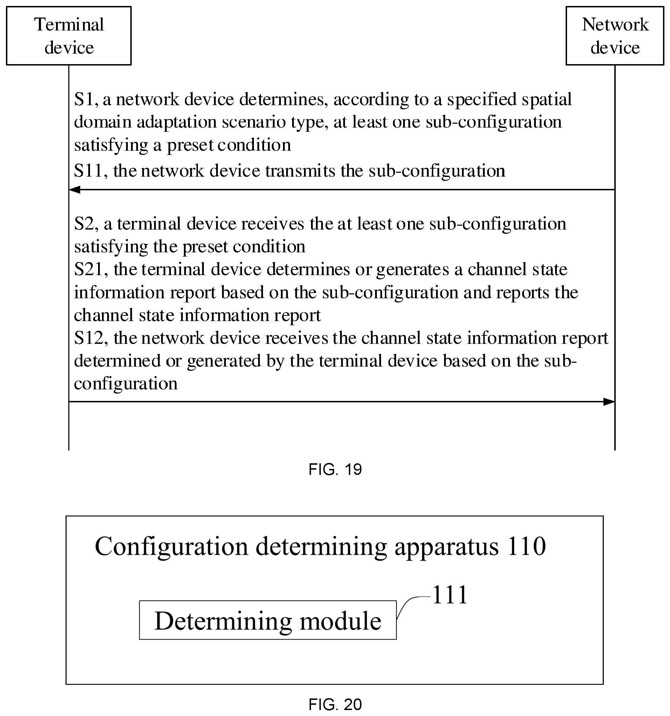

As shown in FIG. 19, based on any of the above embodiments of the present application, this embodiment further discloses the configuration determination method in the aforementioned embodiments.

Optionally, in this embodiment, the method further includes step S21 and/or step S12.

Step S21: the terminal device determines or generates a channel state information report based on the sub-configuration and reports the channel state information report.

Step S12: the network device receives the channel state information report determined or generated by the terminal device based on the sub-configuration.

Optionally, the network device determines at least one sub-configuration satisfying a preset condition according to a specified spatial domain adaptation scenario type, and transmits the at least one sub-configuration. The terminal device receives the at least one sub-configuration satisfying the preset condition. Optionally, the terminal device determines or generates the channel state information report based on the sub-configuration, and reports the channel state information report.

Therefore, the network device determines at least one sub-configuration satisfying a preset condition according to a specified spatial domain adaptation scenario type and transmits the sub-configuration. The terminal device receives the at least one sub-configuration satisfying the preset condition and performs CSI measurement and reporting based on the sub-configuration. Therefore, the problem of how to configure sub-configurations related to spatial domain and power domain in Type 1 SD adaptation and Type 2 SD adaptation scenarios can be solved, thereby enabling the terminal device to achieve reasonable CSI measurement and reporting.

The configuration principles related to this embodiment can be found in in the above various embodiments and details will not be repeated here.

Through the technical solution of the present application, the network device can determine configuration elements of sub-configurations corresponding to different spatial domain adaptation modes based on the spatial domain adaptation scenario type, and can also achieve valid configurations of the determined configuration elements of each sub-configuration, facilitating the terminal device to generate or determine a channel state information report based on each sub-configuration corresponding to different spatial domain adaptation modes, thereby achieving CSI measurement and reporting.

Referring to FIG. 20, which is a first structural schematic diagram of a configuration determining apparatus provided by an embodiment of the present application. The apparatus can be carried on or is the network device in the above method embodiments. As shown in FIG. 20, the configuration determining apparatus 110 includes:

a determining module 111, configured to determine, according to a specified spatial domain adaptation scenario type, at least one sub-configuration satisfying a preset condition.

Optionally, the spatial domain adaptation scenario type includes at least one of the following: a Type 1 spatial domain adaptation scenario or a Type 2 spatial domain adaptation scenario.

Optionally, satisfying the preset condition includes at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with an indication of a channel quality indicator table;
each sub-configuration being associated with a power control offset value;
each sub-configuration being associated with a panel identifier;
all sub-configurations being associated with the same report quantity, the same report frequency configuration and/or the same codebook type.

Optionally, satisfying the preset condition further includes:
for the Type 2 spatial domain adaptation scenario, all sub-configurations being associated with the same rank indicator restriction.

Optionally, the power control offset value includes at least one of the following: a difference relative to a common power control offset value for all sub-configurations, a difference relative to a power control offset value of a first reference sub-configuration and an actual power control offset value of each sub-configuration.

Optionally, the panel identifier includes at least one of the following:

each panel associated with each sub-configuration corresponds to a bit value;
an index offset value between a first panel associated with each sub-configuration and a first panel associated with a first reference sub-configuration;
multiple panels associated with each sub-configuration being uniformly distributed.

Optionally, the apparatus further includes at least one of the following:
the sub-configurations are contained in a channel state information report configuration.

Optionally, a channel state information report report includes at least one of the sub-configurations.

the sub-configurations are contained in a channel state information resource configuration;
each sub-configuration corresponds to a spatial domain adaptation mode;
each sub-configuration is associated with at least one CSI-RS resource;
channel state information reference signal resource indices associated with each sub-configuration are different;
channel state information reference signal resource indices associated with multiple sub-configurations are the same.

Optionally, the first codebook configuration includes at least one of the following: n1-n2 configuration for typel-SinglePanel, typel-SinglePanel-codebookSubsetRestriction-i2, or ng-n1-n2 configuration for typel-MultiPanel.

Optionally, the apparatus further includes:
if the number of CSI-RS ports corresponding to the sub-configuration is 2, typel-SinglePanel-codebookSubsetRestriction-i2 restricts an available codebook of the sub-configuration.

Optionally, the apparatus further includes at least one of the following:

a transmitting module, configured to transmit the sub-configuration;
a receiving module, configured to receive a channel state information report determined or generated by a terminal device based on the sub-configuration.

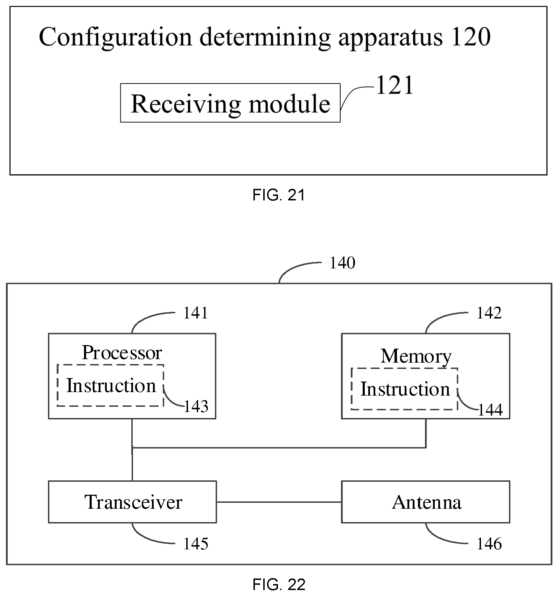

Please refer to FIG. 21, which is a second structural schematic diagram of a configuration determining apparatus provided by an embodiment of the present application. This apparatus can be carried on or is the terminal device in the above method embodiments. The configuration determining apparatus shown in FIG. 21 can be configured to perform part or all of the functions described in the method embodiments above. As shown in FIG. 21, the apparatus 120 includes:
a receiving module 121, configured to receive at least one sub-configuration satisfying a preset condition, where the sub-configuration is determined by a network device according to a specified spatial domain adaptation scenario type.

Optionally, satisfying the preset condition includes at least one of the following:

each sub-configuration being associated with a first codebook configuration;
each sub-configuration being associated with a rank indicator restriction;

each sub-configuration being associated with a list of channel state information reference signal resource indices;

each sub-configuration being associated with an indication of a channel quality indicator table;

each sub-configuration being associated with a power control offset value;

each sub-configuration being associated with a panel identifier;

all sub-configurations being associated with the same report quantity, the same report frequency configuration and/or the same codebook type.

Optionally, satisfying the preset condition further includes:

for the Type 2 spatial domain adaptation scenario, all sub-configurations being associated with the same rank indicator restriction.

Optionally, the power control offset value includes at least one of the following:

a difference relative to a common power control offset value for all sub-configurations;

a difference relative to a power control offset value of a first reference sub-configuration;

an actual power control offset value of each sub-configuration.

Optionally, the panel identifier includes at least one of the following:

each panel associated with each sub-configuration corresponds to a bit value;

an index offset value between a first panel associated with each sub-configuration and a first panel associated with a first reference sub-configuration;

multiple panels associated with each sub-configuration being uniformly distributed.

Optionally, the apparatus further includes at least one of the following:

the sub-configurations are contained in a channel state information report configuration.

Optionally, a channel state information report report includes at least one of the sub-configurations.

the sub-configurations are contained in a channel state information resource configuration;

each sub-configuration corresponds to a spatial domain adaptation mode;

each sub-configuration is associated with at least one CSI-RS resource;

channel state information reference signal resource indices associated with each sub-configuration are different;

channel state information reference signal resource indices associated with multiple sub-configurations are the same.

Optionally, the first codebook configuration includes at least one of the following: n1-n2 configuration for typel-SinglePanel, typel-SinglePanel-codebookSubsetRestriction-i2, or ng-n1-n2 configuration for typel-MultiPanel.

Optionally, the apparatus further includes:

if the number of CSI-RS ports corresponding to the sub-configuration is 2, typel-SinglePanel-codebookSubsetRestriction-i2 restricts an available codebook of the sub-configuration.

The configuration determining apparatus provided by the embodiments of the present application can execute the technical solutions shown in the aforementioned method embodiments. Their implementation principles and effective effects are similar and details will not be repeated here.

Referring to FIG. 22, which is a structural schematic diagram of a communication device provided by an embodiment of the present application. As shown in FIG. 22, the communication device 140 described in this embodiment may be the terminal device (or a component for use in the terminal device) or the network device (or a component for use in the network device) mentioned in the previous method embodiments. The communication device 140 can be configured to implement the methods corresponding to the terminal device or network device described in the above method embodiments, and details can be found in the description of the above method embodiments.

The communication device 140 may include one or more processors 141, which may also be referred to as a processing unit, and is capable of implementing certain control or processing functions. The processor 141 may be a general-purpose processor or a dedicated processor, etc. For example, it may be a baseband processor or a central processing unit. The baseband processor may be used to process communication protocols and communication data. The central processing unit may be used to control the communication device, execute software programs, and process data in the software programs.

Optionally, the processor 141 may also store an instruction 143 or data (for example, intermediate data). Optionally, the instruction 143 may be executed by the processor 141, enabling the communication device 140 to perform the methods corresponding to the terminal device or network device described in the aforementioned method embodiments.

Optionally, the communication device 140 may include a circuit that can implement the functions of transmitting, receiving, or communicating described in the aforementioned method embodiments.

Optionally, the communication device 140 may include one or more memories 142 on which the instruction 144 may be stored. The instruction may be executed on the processor 141, enabling the communication device 140 to perform the methods described in the aforementioned method embodiments.

Optionally, data may also be stored in the memory 142. The processor 141 and the memory 142 may be set separately or integrated together.

Optionally, the communication device 140 may further include a transceiver 145 and/or an antenna 146. The processor 141 may be referred to as a processing unit, controlling the communication device 140 (a terminal device, a core network device, or a wireless access network device). The transceiver 145 may be referred to as a transceiver unit, a transceiver, a transceiver circuit, or the like, configured to implement the transmitting and receiving functions of the communication device 140.

Optionally, if the communication device 140 is configured to implement the operations corresponding to the terminal device in the above embodiments, for example, the transceiver 145 may receive YYY, and the processor 141 may XXX.

Optionally, the specific implementation process of the processor 141 and the transceiver 145 can be found in in the relevant descriptions of the above embodiments and details will not be repeated here.

Optionally, if the communication device 140 is configured to implement the operations corresponding to the network device in the above embodiments, for example, the transceiver 145 may YYY.

Optionally, the specific implementation process of the processor 141 and the transceiver 145 can be found in in the relevant descriptions of the above embodiments and details will not be repeated here.

The processor 141 and the transceiver 145 described in the present application can be implemented on an IC (Integrated Circuit, Integrated Circuit), analog integrated circuit, RFIC (Radio Frequency Integrated Circuit, Radio Frequency Integrated Circuit), mixed-signal integrated circuit, ASIC (Application Specific Integrated Circuit, Application Specific Integrated Circuit), PCB (Printed Circuit Board, Printed Circuit Board), electronic device, etc. The processor 141 and the transceiver 145 can also be manufactured using various integrated circuit process technologies, for example, a CMOS (Complementary Metal-Oxide Semiconductor, Complementary Metal-Oxide Semiconductor), a NMOS (N Metal-Oxide Semiconductor, N Metal-Oxide Semiconductor), a PMOS (Positive channel Metal Oxide Semiconductor, Positive channel Metal Oxide Semiconductor), a BJT (Bipolar Junction Transistor, Bipolar Junction Transistor), Bipolar CMOS (BiCMOS), Silicon Germanium (SiGe), Gallium Arsenide (GaAs), etc.

The communication device in the present application may be a terminal device (for example, a mobile phone) or a network device (for example, a base station). The specific reference should be clarified based on the context. The terminal device may be implemented in various forms. For example, the terminal device described in the present application may include a terminal device such as a mobile phone, a tablet computer, a laptop, a palmtop computer, a personal digital assistant (Personal Digital Assistant, PDA), a portable media player (Portable Media Player, PMP), a navigation device, a wearable device, a smart bracelet, a pedometer, etc., as well as a fixed terminal device such as a digital TV, a desktop computer, etc.

Although in the descriptions of the above embodiments, the communication device is described as a terminal device or network device, the scope of the communication device described in the present application is not limited to the above terminal device or network device, and the structure of the communication device may not be limited by FIG. 16. The communication device may be an independent device or may be part of a larger device.

An embodiment of the present application further provides a communication system, including: the terminal device according to any one of the aforementioned embodiments, and, the network device according to any one of the aforementioned embodiments.

An embodiment of the present application further provides a communication device, including a memory, a processor, and a processing program stored on the memory. When the processing program is executed by the processor, the steps of the processing method according to any one of the above embodiments are implemented.

The communication device in the present application may be a terminal device (for example, a mobile phone) or a network device (for example, a satellite). The specific reference should be clarified based on the context.

An embodiment of the present application further provides a storage medium with a processing program stored thereon. When the processing program is executed by a processor, the steps of the processing method according to any one of the above embodiments are implemented.

The embodiments of the communication device and storage medium provided by the embodiments of the present application may include all the technical features of any embodiment of the aforementioned processing method. The description expansion and explanation content are basically the same as those of the various embodiments of the above method and details will not be repeated here.

An embodiment of the present application further provides a computer program product which includes computer program code. When the computer program code is run on a computer, the computer is enabled to execute the method according to any one of the various possible implementations described above.

An embodiment of the present application further provides a chip, including a memory and a processor. The memory is used to store a computer program, and the processor is used to invoke and run the computer program in the memory, enabling a device on which the chip is installed to execute the method according to any one of the various possible implementations described above.

It is understood that the above scenarios are only examples and do not constitute limitations on the application scenarios of the technical solutions provided by the embodiments of the present application. The technical solutions of the present application can also be applied to other scenarios. For example, those skilled in the art can understand that with the evolution of system architecture and the emergence of new business scenarios, the technical solutions provided by the embodiments of the present application are equally applicable to similar technical problems.

The sequence numbers of the above embodiments of the present application are for description only and do not represent the superiority or inferiority of the embodiments.

The steps in the method embodiments of the present application can be adjusted in order, merged, and deleted according to actual requirements.

The units in the device embodiments of the present application can be merged, divided, and deleted according to actual requirements.

In the present application, for descriptions of identical or similar term concepts, technical solutions, and/or application scenarios, detailed descriptions are generally provided only upon first occurrence. When they appear again later, they are generally not repeated for brevity. When understanding the technical solutions and other content of the present application, for identical or similar term concepts, technical solutions, and/or application scenario descriptions that are not described in detail later, reference can be made to their previous relevant detailed descriptions.

In the present application, the descriptions of the various embodiments each have their own emphasis. For parts not described or recorded in detail in a certain embodiment, reference can be made to the relevant descriptions of other embodiments.

The technical features of the technical solutions of the present application can be combined arbitrarily. To keep the description concise, not all possible combinations of the various technical features in the above embodiments have been described. However, as long as there is no contradiction in the combination of these technical features, they should be considered as falling within the scope recorded in the present application.

Through the description of the above implementations, those skilled in the art can clearly understand that the methods in the above embodiments can be implemented by means of software plus a necessary general hardware platform, and of course, can also be implemented by hardware. In many cases, the former is a better implementation. Based on this understanding, the technical solution of the present application, in essence or the part contributing to the prior art, can be embodied in the form of a software product. The computer software product is stored in a storage medium as above (for example, ROM/RAM, magnetic disk, optical disc), including several instructions for causing a terminal device (which may be a mobile phone, a computer, a server, a controlled terminal device, or a network device, etc.) to execute the method of each embodiment of the present application.

In the aforementioned embodiments, implementation may be entirely or partially through software, hardware, firmware, or a combination thereof. When implemented in software, it may be entirely or partially embodied as a computer program product. The computer program product includes one or more computer instructions. When loaded and executed on a computer, the computer program instructions entirely or partially generate the processes or functions according to the embodiments of the present application. The computer may be a general-purpose computer, a special-purpose computer, a computer network, or other programmable devices. The computer instruction may be stored in a storage medium or transmitted from one storage medium to another storage medium. For example, the computer instruction may be transmitted from a website site, a computer, a server, or a data center to another website site, computer, server, or data center via wired means (for example, coaxial cable, optical fiber, digital subscriber line) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid-state disk, Solid-State Disk (SSD)), etc.

The above descriptions are only preferred embodiments of the present application and do not limit the patent scope of the present application. Any equivalent structure or equivalent process transformation made using the contents of the description and drawings of the present application, or directly or indirectly applied to other related technical fields, shall similarly be included within the scope of patent protection of the present application.

**Claims**

1. A configuration determination method, comprising a step of:
   S1, determining, according to a specified spatial domain adaptation scenario type, at least one sub-configuration satisfying a preset condition.

2. The method according to claim 1, wherein the spatial domain adaptation scenario type comprises at least one of the following:

   a Type 1 spatial domain adaptation scenario;
   a Type 2 spatial domain adaptation scenario.

3. The method according to claim 2, wherein satisfying the preset condition comprises at least one of the following:

   each sub-configuration being associated with a first codebook configuration;
   each sub-configuration being associated with a rank indicator restriction;
   each sub-configuration being associated with a list of channel state information reference signal resource indices;
   each sub-configuration being associated with an indication of a channel quality indicator table;
   each sub-configuration being associated with a power control offset value;
   each sub-configuration being associated with a panel identifier;
   all sub-configurations being associated with a same report quantity, a same report frequency configuration and/or a same codebook type.

4. The method according to claim 3, wherein satisfying the preset condition further comprises:
   for the Type 2 spatial domain adaptation scenario, all sub-configurations being associated with a same rank indicator restriction.

5. The method according to claim 3, wherein the power control offset value comprises at least one of the following:

   a difference relative to a common power control offset value for all sub-configurations;
   a difference relative to a power control offset value of a first reference sub-configuration;
   an actual power control offset value of each sub-configuration.

6. The method according to claim 3, wherein the panel identifier comprises at least one of the following:

   each panel associated with each sub-configuration corresponds to a bit value;
   an index offset value between a first panel associated with each sub-configuration and a first panel associated with a first reference sub-configuration;
   multiple panels associated with each sub-configuration being uniformly distributed.

7. The method according to claim 3, wherein the method further comprises at least one of the following:

   the sub-configurations are contained in a channel state information report configuration;
   the sub-configurations are contained in a channel state information resource configuration;
   each sub-configuration corresponds to a spatial domain adaptation mode;
   each sub-configuration is associated with at least one CSI-RS resource;
   channel state information reference signal resource indices associated with each sub-configuration are different;
   channel state information reference signal resource indices associated with multiple sub-configurations are the same.

8. The method according to claim 3, wherein the first codebook configuration comprises at least one of the following:

   n1-n2 configuration for typeI-SinglePanel;
   typeI-SinglePanel-codebookSubsetRestriction-i2;
   ng-n1-n2 configuration for typeI-MultiPanel.

9. The method according to claim 6, wherein the method further comprises:
   if the number of CSI-RS ports corresponding to the sub-configuration is 2, typeI-SinglePanel-codebookSubsetRestriction-i2 restricts an available codebook of the sub-configuration.

10. The method according to claim 1, wherein the method further comprises at least one of the following:

transmitting the sub-configuration;
receiving a channel state information report which is determined or generated by a terminal device based on the sub-configuration.

11. A configuration determination method, comprising a step of:
S2, receiving at least one sub-configuration satisfying a preset condition, wherein the sub-configuration is determined by a network device according to a specified spatial domain adaptation scenario type.

12. The method according to claim 11, wherein satisfying the preset condition comprises at least one of the following:

each sub-configuration being associated with a first codebook configuration;
each sub-configuration being associated with a rank indicator restriction;
each sub-configuration being associated with a list of channel state information reference signal resource indices;
each sub-configuration being associated with an indication of a channel quality indicator table;
each sub-configuration being associated with a power control offset value;
each sub-configuration being associated with a panel identifier;
all sub-configurations being associated with a same report quantity, a same report frequency configuration and/or a same codebook type.

13. The method according to claim 12, wherein satisfying the preset condition further comprises:
for a Type 2 spatial domain adaptation scenario, all sub-configurations being associated with a same rank indicator restriction.

14. The method according to claim 12, wherein the power control offset value comprises at least one of the following:

a difference relative to a common power control offset value for all sub-configurations;
a difference relative to a power control offset value of a first reference sub-configuration;
an actual power control offset value of each sub-configuration.

15. The method according to claim 12, wherein the panel identifier comprises at least one of the following:

each panel associated with each sub-configuration corresponds to a bit value;
an index offset value between a first panel associated with each sub-configuration and a first panel associated with a first reference sub-configuration;
multiple panels associated with each sub-configuration being uniformly distributed.

16. The method according to claim 11, wherein the method further comprises at least one of the following:

the sub-configurations are contained in a channel state information report configuration;
the sub-configurations are contained in a channel state information resource configuration;
each sub-configuration corresponds to a spatial domain adaptation mode;
each sub-configuration is associated with at least one CSI-RS resource;
channel state information reference signal resource indices associated with each sub-configuration are different;
channel state information reference signal resource indices associated with multiple sub-configurations are the same.

17. The method according to claim 12, wherein the first codebook configuration comprises at least one of the following:

n1-n2 configuration for typeI-SinglePanel;
typeI-SinglePanel-codebookSubsetRestriction-i2;
ng-n1-n2 configuration for typeI-MultiPanel.

18. The method according to claim 17, wherein the method further comprises:
if the number of CSI-RS ports corresponding to the sub-configuration is 2, typeI-SinglePanel-codebookSubsetRestriction-i2 restricts an available codebook of the sub-configuration.

19. A communication device comprising a memory and a processor, a configuration determination program is stored in the memory, when the configuration determination program is executed by the processor, the configuration determination method according to claim 1 or claim 11 is implemented.

20. A storage medium in which a computer program is stored, when the computer program is executed by a processor, the configuration determination method according to claim 1 or claim 11 is implemented.

FIG. 1

FIG. 2

FIG. 3

FIG. 4

Terminal
device

Network
device

S1, a network device determines, according to a specified spatial domain adaptation scenario type, at least one sub-configuration satisfying a preset condition

S11, the network device transmits the sub-configuration

S2, a terminal device receives the at least one sub-configuration satisfying the preset condition

FIG. 5

| Sub-configuration#1 | CSI-RS resource#1 powerControl Offset | CSI-RS resource#2 powerControl Offset | codebookSubs etRestriction | CQI table indication | n1-n2 or ng-n1-n2 or twoTX-CodebookSubset Restriction |
|---|---|---|---|---|---|

| Sub-configuration#2 | CSI-RS resource#3 powerControl Offset | CSI-RS resource#4 powerControl Offset | codebookSubs etRestriction | CQI table indication | n1-n2 or ng-n1-n2 or twoTX-CodebookSubset Restriction |
|---|---|---|---|---|---|

FIG. 6

| | CSI-RS resource#1 | CSI-RS resource#2 | CSI-RS resource#3 |
|---|---|---|---|
| Sub-configuration#1 | powerControlOffset -3dB cqi-table: table 1 eight-two-TypeI-SinglePanel-Restriction: 25 (In hexadecimal format, which in fact requires conversion to binary representation occupying a total of 256 bits) typeI-SinglePanel-codebookSubsetRestriction-i2: 5 (In hexadecimal format, which in fact requires conversion to binary representation occupying a total of 16 bits) | powerControlOffset -3dB cqi-table: table 1 eight-two-TypeI-SinglePanel-Restriction: 25 (In hexadecimal format, which in fact requires conversion to binary representation occupying a total of 256 bits) typeI-SinglePanel-codebookSubsetRestriction-i2: 5 (In hexadecimal format, which in fact requires conversion to binary representation occupying a total of 16 bits) | powerControlOffset -3dB cqi-table: table 1 eight-two-TypeI-SinglePanel-Restriction: 25 (In hexadecimal format, which in fact requires conversion to binary representation occupying a total of 256 bits) typeI-SinglePanel-codebookSubsetRestriction-i2: 5 (In hexadecimal format, which in fact requires conversion to binary representation occupying a total of 16 bits) |
| | CSI-RS resource#4 | CSI-RS resource#5 | CSI-RS resource#6 |
| Sub-configuration#2 | powerControlOffset -1dB cqi-table: table 2 eight-two-TypeI-SinglePanel-Restriction: 48 (In hexadecimal format, which in fact requires conversion to binary representation occupying a total of 256 bits) typeI-SinglePanel-codebookSubsetRestriction-i2: 7 (In hexadecimal format, which in fact requires conversion to binary representation occupying a total of 16 bits) | powerControlOffset -1dB cqi-table: table 2 eight-two-TypeI-SinglePanel-Restriction: 48 (In hexadecimal format, which in fact requires conversion to binary representation occupying a total of 256 bits) typeI-SinglePanel-codebookSubsetRestriction-i2: 7 (In hexadecimal format, which in fact requires conversion to binary representation occupying a total of 16 bits) | powerControlOffset -1dB cqi-table: table 2 eight-two-TypeI-SinglePanel-Restriction: 48 (In hexadecimal format, which in fact requires conversion to binary representation occupying a total of 256 bits) typeI-SinglePanel-codebookSubsetRestriction-i2: 7 (In hexadecimal format, which in fact requires conversion to binary representation occupying a total of 16 bits) |
| | CSI-RS resource#7 | CSI-RS resource#8 | CSI-RS resource#9 |
| Sub-configuration#3 | powerControlOffset 1dB cqi-table: table 2 eight-two-TypeI-SinglePanel-Restriction: 27 (In hexadecimal format, which in fact requires conversion to binary representation occupying a total of 256 bits) typeI-SinglePanel-codebookSubsetRestriction-i2: 10 (In hexadecimal format, which in fact requires conversion to binary representation occupying a total of 16 bits) | powerControlOffset 1dB cqi-table: table 2 eight-two-TypeI-SinglePanel-Restriction: 27 (In hexadecimal format, which in fact requires conversion to binary representation occupying a total of 256 bits) typeI-SinglePanel-codebookSubsetRestriction-i2: 10 (In hexadecimal format, which in fact requires conversion to binary representation occupying a total of 16 bits) | powerControlOffset 1dB cqi-table: table 2 eight-two-TypeI-SinglePanel-Restriction: 27 (In hexadecimal format, which in fact requires conversion to binary representation occupying a total of 256 bits) typeI-SinglePanel-codebookSubsetRestriction-i2: 10 (In hexadecimal format, which in fact requires conversion to binary representation occupying a total of 16 bits) |

FIG. 7

common powerControlOffset

| | CSI-RS resource#1 Offset value A relative to the common powerControl Offset value | CSI-RS resource#2 Offset value A relative to the common powerControl Offset value | codebookSubsetRestriction | CQI table indication | n1-n2 or ng-n1-n2 or twoTX-CodebookSubset Restriction |
|---|---|---|---|---|---|
| Sub-configuration#1 | CSI-RS resource#1 Offset value A relative to the common powerControl Offset value | CSI-RS resource#2 Offset value A relative to the common powerControl Offset value | codebookSubsetRestriction | CQI table indication | n1-n2 or ng-n1-n2 or twoTX-CodebookSubset Restriction |
| Sub-configuration#2 | CSI-RS resource#3 Offset value B relative to the common powerControl Offset value | CSI-RS resource#4 Offset value B relative to the common powerControl Offset value | codebookSubsetRestriction | CQI table indication | n1-n2 or ng-n1-n2 or twoTX-CodebookSubset Restriction |

FIG. 8

| | CSI-RS resource#1 | CSI-RS resource#2 | CSI-RS resource#3 | |
|---|---|---|---|---|
| Sub-configuration#1 | PowerOffset value relative to the common powerControlOffset -2dB cqi-table: table 1 eight-two-TypeI-SinglePanel-Restriction: 25 (In hexadecimal format, which in fact requires conversion to binary representation occupying a total of 256 bits) typeI-SinglePanel-codebookSubsetRestriction-i2: 5 (In hexadecimal format, which in fact requires conversion to binary representation occupying a total of 16 bits) | PowerOffset value relative to the common powerControlOffset -2dB cqi-table: table 1 eight-two-TypeI-SinglePanel-Restriction: 25 (In hexadecimal format, which in fact requires conversion to binary representation occupying a total of 256 bits) typeI-SinglePanel-codebookSubsetRestriction-i2: 5 (In hexadecimal format, which in fact requires conversion to binary representation occupying a total of 16 bits) | PowerOffset value relative to the common powerControlOffset -2dB cqi-table: table 1 eight-two-TypeI-SinglePanel-Restriction: 25 (In hexadecimal format, which in fact requires conversion to binary representation occupying a total of 256 bits) typeI-SinglePanel-codebookSubsetRestriction-i2: 5 (In hexadecimal format, which in fact requires conversion to binary representation occupying a total of 16 bits) | |
| Sub-configuration#2 | CSI-RS resource#4 PowerOffset value relative to the common powerControlOffset 0dB cqi-table: table 2 eight-two-TypeI-SinglePanel-Restriction: 48 (In hexadecimal format, which in fact requires conversion to binary representation occupying a total of 256 bits) typeI-SinglePanel-codebookSubsetRestriction-i2: 7 (In hexadecimal format, which in fact requires conversion to binary representation occupying a total of 16 bits) | CSI-RS resource#5 PowerOffset value relative to the common powerControlOffset 0dB cqi-table: table 2 eight-two-TypeI-SinglePanel-Restriction: 48 (In hexadecimal format, which in fact requires conversion to binary representation occupying a total of 256 bits) typeI-SinglePanel-codebookSubsetRestriction-i2: 7 (In hexadecimal format, which in fact requires conversion to binary representation occupying a total of 16 bits) | CSI-RS resource#6 PowerOffset value relative to the common powerControlOffset 0dB cqi-table: table 2 eight-two-TypeI-SinglePanel-Restriction: 48 (In hexadecimal format, which in fact requires conversion to binary representation occupying a total of 256 bits) typeI-SinglePanel-codebookSubsetRestriction-i2: 7 (In hexadecimal format, which in fact requires conversion to binary representation occupying a total of 16 bits) | Common powerControl Offset -1dB |
| Sub-configuration#3 | CSI-RS resource#7 PowerOffset value relative to the common powerControlOffset 2dB cqi-table: table 2 eight-two-TypeI-SinglePanel-Restriction: 27 (In hexadecimal format, which in fact requires conversion to binary representation occupying a total of 256 bits) typeI-SinglePanel-codebookSubsetRestriction-i2: 10 (In hexadecimal format, which in fact requires conversion to binary representation occupying a total of 16 bits) | CSI-RS resource#8 PowerOffset value relative to the common powerControlOffset 2dB cqi-table: table 2 eight-two-TypeI-SinglePanel-Restriction: 27 (In hexadecimal format, which in fact requires conversion to binary representation occupying a total of 256 bits) typeI-SinglePanel-codebookSubsetRestriction-i2: 10 (In hexadecimal format, which in fact requires conversion to binary representation occupying a total of 16 bits) | CSI-RS resource#9 PowerOffset value relative to the common powerControlOffset 2dB cqi-table: table 2 eight-two-TypeI-SinglePanel-Restriction: 27 (In hexadecimal format, which in fact requires conversion to binary representation occupying a total of 256 bits) typeI-SinglePanel-codebookSubsetRestriction-i2: 10 (In hexadecimal format, which in fact requires conversion to binary representation occupying a total of 16 bits) | |

FIG. 9

| CSI-RS resource#1 | CSI-RS resource#2 |
|---|---|
| ***Sub-configuration#1***<br>powerControlOffset 1<br>codebookSubsetRestriction<br>panel indication<br>ri-Restriction<br>n1-n2 or<br>ng-n1-n2 or<br>twoTX-CodebookSubsetRestriction | ***Sub-configuration#1***<br>powerControlOffset 1<br>codebookSubsetRestriction<br>panel indication<br>ri-Restriction<br>n1-n2 or<br>ng-n1-n2 or<br>twoTX-CodebookSubsetRestriction |
| ***Sub-configuration#2***<br>powerControlOffset 2<br>codebookSubsetRestriction<br>panel indication<br>ri-Restriction<br>n1-n2 or<br>ng-n1-n2 or<br>twoTX-CodebookSubsetRestriction | ***Sub-configuration#2***<br>powerControlOffset 2<br>codebookSubsetRestriction<br>panel indication<br>ri-Restriction<br>n1-n2 or<br>ng-n1-n2 or<br>twoTX-CodebookSubsetRestriction |

FIG. 10

| CSI-RS resource#1 | CSI-RS resource#2 |
|---|---|
| **Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" | **Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" |
| **Sub-configuration#2**<br>**16 port**<br><br>powerControlOffset -1dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" | **Sub-configuration#2**<br>**16 port**<br><br>powerControlOffset -1dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" |
| **Sub-configuration#3**<br>**8 port**<br><br>powerControlOffset 1dB<br>two-two-TypeI-SinglePanel-Restriction:<br>27 (In hexadecimal format, which in fact<br>requires conversion to binary<br>representation occupying a total of 64 bits)<br>typeI-SinglePanel-<br>codebookSubsetRestriction-i2: 10 (In<br>hexadecimal format, which in fact requires<br>conversion to binary representation<br>occupying a total of 16 bits)<br>ri-Restriction "0111" | **Sub-configuration#3**<br>**8 port**<br><br>powerControlOffset 1dB<br>two-two-TypeI-SinglePanel-Restriction:<br>27 (In hexadecimal format, which in fact<br>requires conversion to binary<br>representation occupying a total of 64 bits)<br>typeI-SinglePanel-<br>codebookSubsetRestriction-i2: 10 (In<br>hexadecimal format, which in fact requires<br>conversion to binary representation<br>occupying a total of 16 bits)<br>ri-Restriction "0111" |

FIG. 11

| CSI-RS resource#1 | CSI-RS resource#2 |
|---|---|
| **Sub-configuration#1**<br>powerControlOffset 1<br>codebookSubsetRestriction<br>panel indication<br>ri-Restriction<br>n1-n2 or<br>ng-n1-n2 or<br>twoTX-<br>CodebookSubsetRestriction | **Sub-configuration#1**<br>powerControlOffset 1<br>codebookSubsetRestriction<br>panel indication<br>ri-Restriction<br>n1-n2 or<br>ng-n1-n2 or<br>twoTX-<br>CodebookSubsetRestriction |
| **Sub-configuration#2**<br><br>Offset value A relative to the<br>value of powerControlOffset 1<br>codebookSubsetRestriction<br>panel indication<br>ri-Restriction<br>n1-n2 or<br>ng-n1-n2 or<br>twoTX-<br>CodebookSubsetRestriction | **Sub-configuration#2**<br><br>Offset value A relative to the<br>value of powerControlOffset 1<br>codebookSubsetRestriction<br>codebookSubsetRestriction<br>panel indication<br>ri-Restriction<br>n1-n2 or<br>ng-n1-n2 or<br>twoTX-<br>CodebookSubsetRestriction |

FIG. 12

| CSI-RS resource#1<br><br>**Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" | CSI-RS resource#1<br><br>**Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" |
|---|---|
| **Sub-configuration#2**<br>**16 port**<br><br>PowerOffset value relative to the<br>powerControlOffset of 32 port 2dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" | **Sub-configuration#2**<br>**16 port**<br><br>PowerOffset value relative to the<br>powerControlOffset of 32 port 2dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" |
| **Sub-configuration#3**<br>**8 port**<br><br>PowerOffset value relative to the<br>powerControlOffset of 32 port 4dB<br>two-two-TypeI-SinglePanel-Restriction:<br>27 (In hexadecimal format, which in fact<br>requires conversion to binary<br>representation occupying a total of 64 bits)<br>typeI-SinglePanel-<br>codebookSubsetRestriction-i2: 10 (In<br>hexadecimal format, which in fact requires<br>conversion to binary representation<br>occupying a total of 16 bits)<br>ri-Restriction "0111" | **Sub-configuration#3**<br>**8 port**<br><br>PowerOffset value relative to the<br>powerControlOffset of 32 port 4dB<br>two-two-TypeI-SinglePanel-Restriction:<br>27 (In hexadecimal format, which in fact<br>requires conversion to binary<br>representation occupying a total of 64 bits)<br>typeI-SinglePanel-<br>codebookSubsetRestriction-i2: 10 (In<br>hexadecimal format, which in fact requires<br>conversion to binary representation<br>occupying a total of 16 bits)<br>ri-Restriction "0111" |

FIG. 13

FIG. 14

| CSI-RS resource#1 | CSI-RS resource#1 |
|---|---|
| **Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" | **Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" |
| **Sub-configuration#2**<br>**16 port**<br><br>PowerOffset value relative to the<br>powerControlOffset of 32 port 2dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" | **Sub-configuration#2**<br>**16 port**<br><br>PowerOffset value relative to the<br>powerControlOffset of 32 port 2dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" |
| **Sub-configuration#3**<br>**8 port**<br><br>PowerOffset value relative to the<br>powerControlOffset of 32 port 4dB<br>two-two-TypeI-SinglePanel-Restriction:<br>27 (In hexadecimal format, which in fact<br>requires conversion to binary<br>representation occupying a total of 64 bits)<br>typeI-SinglePanel-<br>codebookSubsetRestriction-i2: 10 (In<br>hexadecimal format, which in fact requires<br>conversion to binary representation<br>occupying a total of 16 bits)<br>ri-Restriction "0111" | **Sub-configuration#3**<br>**8 port**<br><br>PowerOffset value relative to the<br>powerControlOffset of 32 port 4dB<br>two-two-TypeI-SinglePanel-Restriction:<br>27 (In hexadecimal format, which in fact<br>requires conversion to binary<br>representation occupying a total of 64 bits)<br>typeI-SinglePanel-<br>codebookSubsetRestriction-i2: 10 (In<br>hexadecimal format, which in fact requires<br>conversion to binary representation<br>occupying a total of 16 bits)<br>ri-Restriction "0111" |

FIG. 15

FIG. 16

CSI-RS resource#1

**Sub-configuration#1**
**32 port**

powerControlOffset -3dB
four-two-two-TypeI-MultiPanel-
Restriction: 25 (In hexadecimal format,
which in fact requires conversion to binary
representation occupying a total of 64 bits)
panel indication "1111"
ri-Restriction "1111"

**Sub-configuration#2**
**16 port**

PowerOffset value relative to the
powerControlOffset of 32 port 2dB
four-two-one-TypeI-MultiPanel-
Restriction: 48 (In hexadecimal format,
which in fact requires conversion to binary
representation occupying a total of 8 bits)
panel indication "1111"
ri-Restriction "0111"

**Sub-configuration#3**
**8 port**

PowerOffset value relative to the
powerControlOffset of 32 port 4dB
two-two-one-TypeI-MultiPanel-
Restriction: 27 (In hexadecimal format,
which in fact requires conversion to binary
representation occupying a total of 8 bits)
panel indication "0110"
ri-Restriction "0111"

CSI-RS resource#2

**Sub-configuration#1**
**32 port**

powerControlOffset -3dB
four-two-two-TypeI-MultiPanel-
Restriction: 25 (In hexadecimal format,
which in fact requires conversion to binary
representation occupying a total of 64 bits)
panel indication "1111"
ri-Restriction "1111"

**Sub-configuration#2**
**16 port**

PowerOffset value relative to the
powerControlOffset of 32 port 2dB
four-two-one-TypeI-MultiPanel-
Restriction: 48 (In hexadecimal format,
which in fact requires conversion to binary
representation occupying a total of 8 bits)
panel indication "1111"
ri-Restriction "0111"

**Sub-configuration#3**
**8 port**

PowerOffset value relative to the
powerControlOffset of 32 port 4dB
two-two-one-TypeI-MultiPanel-
Restriction: 27 (In hexadecimal format,
which in fact requires conversion to binary
representation occupying a total of 8 bits)
panel indication "0110"
ri-Restriction "0111"

FIG. 17

| CSI-RS resource#1 | CSI-RS resource#1 |
|---|---|
| **Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" | **Sub-configuration#1**<br>**32 port**<br><br>powerControlOffset -3dB<br>eight-two-TypeI-SinglePanel-Restriction:<br>25 (In hexadecimal format, which in fact<br>requires conversion to binary<br>representation occupying a total of 256<br>bits)<br>typeI-SinglePanel-<br>codebookSubsetRestriction-i2: 5 (In<br>hexadecimal format, which in fact requires<br>conversion to binary representation<br>occupying a total of 16 bits)<br>ri-Restriction "1111" |
| **Sub-configuration#2**<br>**16 port**<br><br>PowerOffset value relative to the<br>powerControlOffset of 32 port 2dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" | **Sub-configuration#2**<br>**16 port**<br><br>PowerOffset value relative to the<br>powerControlOffset of 32 port 2dB<br>four-two-TypeI-SinglePanel-Restriction:<br>48 (In hexadecimal format, which in fact<br>requires conversion to binary<br>representation occupying a total of 128<br>bits)<br>typeI-SinglePanel-<br>codebookSubsetRestriction-i2: 7 (In<br>hexadecimal format, which in fact requires<br>conversion to binary representation<br>occupying a total of 16 bits)<br>ri-Restriction "0111" |
| **Sub-configuration#3**<br>**2 port**<br><br>PowerOffset value relative to the<br>powerControlOffset of 32 port 4dB<br>typeI-SinglePanel-<br>codebookSubsetRestriction-i2: 2 (In<br>hexadecimal format, which in fact requires<br>conversion to binary representation<br>occupying a total of 16 bits)<br>ri-Restriction "0111" | **Sub-configuration#3**<br>**2 port**<br><br>PowerOffset value relative to the<br>powerControlOffset of 32 port 4dB<br>typeI-SinglePanel-<br>codebookSubsetRestriction-i2: 2 (In<br>hexadecimal format, which in fact requires<br>conversion to binary representation<br>occupying a total of 16 bits)<br>ri-Restriction "0111" |

FIG. 18

EP 4 757 224 A1

Terminal
device

Network
device

S1, a network device determines, according to a specified spatial
domain adaptation scenario type, at least one sub-configuration
satisfying a preset condition
S11, the network device transmits the sub-configuration

S2, a terminal device receives the at least one sub-configuration
satisfying the preset condition
S21, the terminal device determines or generates a channel state
information report based on the sub-configuration and reports the
channel state information report
S12, the network device receives the channel state information report
determined or generated by the terminal device based on the sub-
configuration

FIG. 19

Configuration determining apparatus 110

Determining module ⌐111

FIG. 20

Configuration determining apparatus 120

Receiving module ⌐121

FIG. 21

140

141
Processor
Instruction
143

142
Memory
Instruction
144

Transceiver
145

Antenna
146

FIG. 22

## INTERNATIONAL SEARCH REPORT

| | International application No. |
|---|---|
| | **PCT/CN2023/110628** |

**A. CLASSIFICATION OF SUBJECT MATTER**

H04L5/00(2006.01)i

According to International Patent Classification (IPC) or to both national classification and IPC

**B. FIELDS SEARCHED**

Minimum documentation searched (classification system followed by classification symbols)

IPC: H04L H04B

Documentation searched other than minimum documentation to the extent that such documents are included in the fields searched

Electronic data base consulted during the international search (name of data base and, where practicable, search terms used)

DWPI, CNTXT, ENTXTC, CNKI, 3GPP: spatial, domain, dynamic, adaptation, element, enabled, disabled, antenna port, type, sub-configuration, CSI, report, rank, codebook, 空间域, 元素, 动态, 自适应, 激活, 去激活, 天线端口, 类型, 子配置, 报告, 秩, 码书

**C. DOCUMENTS CONSIDERED TO BE RELEVANT**

| Category* | Citation of document, with indication, where appropriate, of the relevant passages | Relevant to claim No. |
|---|---|---|
| X | SAMSUNG. "Techniques in spatial and power domains"<br>*3GPP TSG RAN WG1 #112bis, R1-2303141*, 26 April 2023 (2023-04-26),<br>  sections 1, 3, and 4 | 1-20 |
| X | ERICSSON. "NW energy saving techniques in spatial and power domains"<br>*3GPP TSG RAN WG1#112-bis-e, R1-2303757*, 26 April 2023 (2023-04-26),<br>  sections 1-3 | 1-20 |
| A | CN 116032416 A (WEIWO SOFTWARE TECHNOLOGY CO., LTD.) 28 April 2023<br>(2023-04-28)<br>  entire document | 1-20 |
| A | US 2022303812 A1 (LG ELECTRONICS INC.) 22 September 2022 (2022-09-22)<br>  entire document | 1-20 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 April 2024** | **16 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110628**

| Patent document cited in search report | | | Publication date (day/month/year) | Patent family member(s) | | | Publication date (day/month/year) |
|---|---|---|---|---|---|---|---|
| CN | 116032416 | A | 28 April 2023 | None | | | |
| US | 2022303812 | A1 | 22 September 2022 | WO | 2021029701 | A1 | 18 February 2021 |
| | | | | KR | 20220046608 | A | 14 April 2022 |
| | | | | EP | 4064585 | A1 | 28 September 2022 |
| | | | | JP | 2022544689 | A | 20 October 2022 |

Form PCT/ISA/210 (patent family annex) (July 2022)